# EUROPEAN PATENT APPLICATION

(11) **EP 3 001 602 A1**
(43) Date of publication of application: **30.03.2016**
(21) Application number: 13888579.3
(22) Date of filing: 02.07.2013
(51) Int. Cl.: H04L 12/18

(54) **METHOD, RELATED DEVICE AND SYSTEM SUPPORTING STREAMING MEDIA MULTICAST**

(71) Applicant: Huawei Technologies Co., Ltd., Longgang District Shenzhen, Guangdong 518129 (CN)
(72) Inventor: LI, Zhiming, Shenzhen Guangdong 518129 (CN); WEI, Anni, Shenzhen Guangdong 518129 (CN)
(74) Representative: Goddar, Heinz J.
(86) International application number: PCT/CN2013/078704
(87) International publication number: WO 2015/000141

(57) **Abstract**

A method for supporting multicast of streaming media, and a related apparatus and system are disclosed. The method includes: receiving a notification message reported by a proxy server, where the notification message includes that first user equipment and second user equipment separately access a same streaming media resource; switching a transmission manner of the streaming media resource from a unicast manner to a multicast manner; sending combined group information to a broadcast multicast service center BM-SC, where the combined group information includes an Internet Protocol IP address of the first user equipment, an IP address of the second user equipment, and a download address of the streaming media resource; and sending a notification response message to the proxy server, so that the proxy server learns that the BM-SC enables a multimedia broadcast multicast service MBMS service.

## Description

### TECHNICAL FIELD

Embodiments of the present invention relate to the field of communications, and in particular, to a method for supporting multicast of streaming media, and a related apparatus and system.

### BACKGROUND

A streaming media service refers to transmission of a continuous multimedia file by using a streaming transmission technology, where the multimedia file includes an audio, a video, animation, and the like. A multimedia file such as a continuous image and voice is compressed and then the compressed file is stored in a network server; a client does not need to download the whole multimedia file before playback, but first downloads some multimedia information to a buffer, and then continuously downloads the remaining part of the multimedia file from the server to the client while playing the information in the buffer.

A DASH (Dynamic Adaptive Steaming over Hypertext Transfer Protocol, Dynamic Adaptive Steaming over Hypertext Transfer Protocol) technology is a technology recently proposed for solving a problem that transmission of streaming media cannot be ensured due to channel fluctuation in mobile communications. The DASH can effectively adapt to a change in a radio channel.

A 3GP-DASH media file that is defined by the 3GPP (3rd Generation Partnership Project, 3rd Generation Partnership Project) and transmitted in a DASH network includes two parts: a media presentation description (Media Presentation Description, MPD) file and a streaming media file. A DASH server first generates different representations (Representation) with different code rates for a same streaming media file, where each representation includes multiple segments (Segment), and each segment generally lasts for several seconds or more than ten seconds. UE (User Equipment, user equipment) selects segments of different representations according to a current network transmission status. The "representations" and the "segments" of the streaming media are described in the MPD file. After acquiring the MPD file, the UE may select a certain representation of the streaming media according to a current network status, and acquire, by using a request, a media stream corresponding to a certain segment.

In a same network, when multiple users all request a video resource, because a service requested by each user is transmitted in a unicast manner, vast transmission resources are certainly occupied when the multiple users request the video resource. Such a scenario is very common in real life, such as popular movie on demand and popular match on demand at present. Because a Long Term Evolution (Long Term Evolution, LTE) system can support service characteristics of an enhanced multimedia broadcast multicast service (eMBMS), same service data of a broadcast multicast service may be sent to all users in one or more cells in a broadcast manner, thereby reducing signaling overheads and data-plane resources. A BM-SC (Broadcast Multicast Service Centre, broadcast multicast service center) is an ingress of a content provider, and is used to authorize users, initiate an MBMS (Multimedia Broadcast Multicast Service, multimedia broadcast multicast service) service in a mobile network, and transmit MBMS content according to a preset time schedule. The user acquires user service description (User Service Description, USD) by using the BM-SC, where the USD includes a start time (start time) of an MBMS service that can be selected by the user, service duration (duration) of the MBMS service, an MBMS service area identity list (MBMS SAI list), and one or more frequencies at which the MBMS service is played.

It is found during implementation of the present invention that,, in a 3GPP-based DASH network, the prior art supports only a unicast manner based on a video stream transmission technology or a multicast manner based on an eMBMS. If a unicast manner is being used to transmit a video stream in the current service transmission process, in order to reduce transmission resources, switching from the unicast manner to a multicast manner may be needed. However, currently, there is no related solution to solve this problem. Therefore, how to implement switching from unicast to multicast in the 3GPP-based DASH network is a problem that needs to be solved urgently at present in the industry.

### SUMMARY

Embodiments of the present invention provide a method for supporting multicast of streaming media, and a related apparatus and system, which can implement switching from unicast to multicast in a service playback process, and reduce backhaul link resources of a core network and air interface resources of a base station.

According to a first aspect, an embodiment of the present invention provides a method for supporting multicast of streaming media, including:
receiving a notification message reported by a proxy server, where the notification message includes that first user equipment and second user equipment separately access a same streaming media resource;
switching a transmission manner of the streaming media resource from a unicast manner to a multicast manner;
sending combined group information to a broadcast multicast service center BM-SC, where the combined group information includes an Internet Protocol IP address of the first user equipment, an IP address of the second user equipment, and a download address of the streaming media resource; and
sending a notification response message to the proxy server, so that the proxy server learns that the BM-SC enables a multimedia broadcast multicast service MBMS service.

With reference to the first aspect, in a first possible implementation manner of the first aspect, after the sending combined group information to a broadcast multicast service center BM-SC, the method further includes:
receiving file delivery table FDT instance information and user service description USD information that are sent by the BM-SC, where the FDT instance information is a result of encoding performed on the streaming media resource after the BM-SC acquires the streaming media resource according to the combined group information; and
sending the FDT instance information and the USD information to the proxy server.

With reference to the first aspect or the first possible implementation manner of the first aspect, in a second possible implementation manner of the first aspect, after the receiving a notification message reported by a proxy server, the method further includes:
acquiring the IP address of the first user equipment and the IP address of the second user equipment from the notification message;
acquiring an identity ID of the first user equipment and an ID of the second user equipment respectively according to the IP address of the first user equipment and the IP address of the second user equipment;
determining, according to the ID of the first user equipment and the ID of the second user equipment, whether the first user equipment and the second user equipment support the multimedia broadcast multicast service MBMS service; and
if the first user equipment and the second user equipment both support the MBMS service, triggering execution of the switching a transmission manner of the streaming media resource from a unicast manner to a multicast manner.

With reference to the first aspect, or the first or second possible implementation manner of the first aspect, in a third possible implementation manner of the first aspect, after the receiving a notification message reported by a proxy server, the method further includes:
acquiring the IP address of the first user equipment and the IP address of the second user equipment from the notification message;
acquiring an identity ID of the first user equipment and an ID of the second user equipment respectively according to the IP address of the first user equipment and the IP address of the second user equipment;
acquiring, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
determining, based on the acquired congestion information of the cell in which the first user equipment is located, congestion information of the cell in which the second user equipment is located, QoS information of the first user equipment, and QoS information of the second user equipment, to trigger execution of the switching a transmission manner of the streaming media resource from a unicast manner to a multicast manner.

With reference to the first aspect, or the first or second or third possible implementation manner of the first aspect, in a fourth possible implementation manner of the first aspect, after the receiving a notification message reported by a proxy server, the method further includes:
acquiring the IP address of the first user equipment and the IP address of the second user equipment from the notification message;
acquiring an identity ID of the first user equipment and an ID of the second user equipment respectively according to the IP address of the first user equipment and the IP address of the second user equipment;
acquiring, according to the ID of the first user equipment, a cell identity Cell ID of the cell in which the first user equipment is located, and acquiring, according to the ID of the second user equipment, a cell identity Cell ID of the cell in which the second user equipment is located;
querying whether the Cell ID of the cell in which the first user equipment is located and the Cell ID of the cell in which the second user equipment is located are in a same single frequency network area SFN area and a same multimedia broadcast multicast service area MBMS service area;
if the cell in which the first user equipment is located and the cell in which the second user equipment is located are in the same SFN area and the same MBMS Service area, triggering execution of the switching a transmission manner of the streaming media resource from a unicast manner to a multicast manner; and
if the cell in which the first user equipment is located and the cell in which the second user equipment is located are in the same SFN area but are not in the same MBMS Service area, instructing the BM-SC to create an MBMS Service area, and then triggering execution of the switching a transmission manner of the streaming media resource from a unicast manner to a multicast manner.

According to a second aspect, an embodiment of the present invention further provides a method for supporting multicast of streaming media, including:
detecting download addresses of streaming media resources that are requested separately by first user equipment and second user equipment, and acquiring that the first user equipment and the second user equipment separately access a same streaming media resource;
reporting a notification message to a policy and charging rules function PCRF or a broadcast multicast service center BM-SC, where the notification message includes that the first user equipment and the second user equipment separately access a same streaming media resource;
acquiring file delivery table FDT instance information and user service description USD information; and
separately sending multimedia broadcast multicast service MBMS service indication information to the first user equipment and the second user equipment, where the MBMS service indication information includes the FDT instance information and the USD information.

With reference to the second aspect, in a first possible implementation manner of the second aspect, the acquiring file delivery table FDT instance information and user service description USD information includes:
receiving the FDT instance information and the USD information that are sent by the PCRF.

With reference to the second aspect, in a second possible implementation manner of the second aspect, the acquiring file delivery table FDT instance information and user service description USD information includes:
sending a download address corresponding to the streaming media resource to the broadcast multicast service center BM-SC;
downloading the streaming media resource corresponding to the download address from a content server, or extracting the streaming media resource corresponding to the download address from a local storage;
sending the streaming media resource to the BM-SC, so that the BM-SC encodes the streaming media resource to generate the FDT instance information; and
receiving the FDT instance information and the USD information that are sent by the BM-SC.

With reference to the second aspect, or the first or the second possible implementation manner of the second aspect, in a third possible implementation manner of the second aspect, after the detecting download addresses of streaming media resources that are requested separately by first user equipment and second user equipment, the method further includes:
querying, by using user agency profile UAProf information, whether the first user equipment and the second user equipment support a multimedia broadcast multicast service MBMS service; and
if the first user equipment and the second user equipment both support the MBMS service, triggering execution of the reporting a notification message to a policy and charging rules function PCRF.

With reference to the second aspect, or the first or second or third possible implementation manner of the second aspect, in a fourth possible implementation manner of the second aspect, before the reporting a notification message to a policy and charging rules function PCRF, the method further includes:
acquiring a media presentation description file MPD from the content server, where the notification message further includes the MPD.

According to a third aspect, an embodiment of the present invention further provides a method for supporting multicast of streaming media, including:
receiving combined group information reported by a policy and charging rules function PCRF, where the combined group information includes an Internet Protocol IP address of first user equipment, an IP address of second user equipment, and a download address of a streaming media resource, where the first user equipment and the second user equipment separately access a same streaming media resource;
acquiring the streaming media resource according to the download address of the streaming media resource;
encoding the streaming media resource, to obtain file delivery table FDT instance information;
generating user service description USD information; and
sending the FDT instance information and the USD information to the PCRF or a proxy server.

With reference to the third aspect, in a first possible implementation manner of the third aspect, the acquiring the streaming media resource according to the download address of the streaming media resource includes:
receiving the streaming media resource corresponding to the download address and sent by the proxy server; or
requesting, according to the download address, the streaming media resource corresponding to the download address from a content server, and receiving the streaming media resource corresponding to the download address and returned by the content server.

With reference to the third aspect or the first possible implementation manner of the third aspect, in a second possible implementation manner of the third aspect, the combined group information further includes: a media presentation description file MPD; and
after the acquiring the streaming media resource according to the download address of the streaming media resource, the method further includes:
acquiring, according to the MPD, the streaming media resource corresponding to another download address than the foregoing download address in the MPD.

With reference to the third aspect or the first or second possible implementation manner of the third aspect, in a third possible implementation manner of the third aspect, after the sending the FDT instance information and the USD information to the PCRF or a proxy server, the method further includes:
simultaneously sending the streaming media resource to the first user equipment and the second user equipment according to a multimedia broadcast multicast service MBMS service.

With reference to the third possible implementation manner of the third aspect, in a fourth possible implementation manner of the third aspect, the simultaneously sending the streaming media resource to the first user equipment and the second user equipment according to a multimedia broadcast multicast service MBMS service includes:
sending MBMS session information to a base station of a cell to which the first user equipment belongs and a base station of a cell to which the second user equipment belongs; and
sending the streaming media resource to the base station of the cell to which the first user equipment belongs and the base station of the cell to which the second user equipment belongs, so that the base station of the cell to which the first user equipment belongs sends the streaming media resource to the first user equipment and the base station of the cell to which the second user equipment belongs sends the streaming media resource to the second user equipment.

According to a fourth aspect, an embodiment of the present invention further provides a method for supporting multicast of streaming media, including:
receiving a notification message reported by a proxy server, where the notification message includes that first user equipment and second user equipment separately access a same streaming media resource;
switching a transmission manner of the streaming media resource from a unicast manner to a multicast manner; and
sending a notification response message to the proxy server, so that the proxy server learns that the BM-SC enables a multimedia broadcast multicast service MBMS service.

With reference to the fourth aspect, in a first possible implementation manner of the fourth aspect, after the sending a notification response message to the proxy server, the method further includes:
acquiring the streaming media resource according to a download address of the streaming media resource;
encoding the streaming media resource, to obtain file delivery table FDT instance information;
generating user service description USD information; and
sending the FDT instance information and the USD information to the proxy server.

With reference to the fourth aspect or the first possible implementation manner of the fourth aspect, in a second possible implementation manner of the fourth aspect, after the receiving a notification message reported by a proxy server, the method further includes:
acquiring an IP address of the first user equipment and an IP address of the second user equipment from the notification message;
acquiring an identity ID of the first user equipment and an ID of the second user equipment respectively according to the IP address of the first user equipment and the IP address of the second user equipment;
determining, according to the ID of the first user equipment and the ID of the second user equipment, whether the first user equipment and the second user equipment support the multimedia broadcast multicast service MBMS service; and
if the first user equipment and the second user equipment both support the MBMS service, triggering execution of the switching a transmission manner of the streaming media resource from a unicast manner to a multicast manner.

With reference to the fourth aspect or the first or second possible implementation manner of the fourth aspect, in a third possible implementation manner of the fourth aspect, after the receiving a notification message reported by a proxy server, the method further includes:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
determining, based on the acquired congestion information of the cell in which the first user equipment is located, congestion information of the cell in which the second user equipment is located, QoS information of the first user equipment, and QoS information of the second user equipment, to trigger execution of the switching a transmission manner of the streaming media resource from a unicast manner to a multicast manner.

With reference to the fourth aspect, or the first or second or third possible implementation manner of the fourth aspect, in a fourth possible implementation manner of the fourth aspect, after the receiving a notification message reported by a proxy server, the method further includes:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment, a cell identity Cell ID of the cell in which the first user equipment is located, and acquiring, according to the ID of the second user equipment, a cell identity Cell ID of the cell in which the second user equipment is located;
querying whether the Cell ID of the cell in which the first user equipment is located and the Cell ID of the cell in which the second user equipment is located are in a same single frequency network area SFN area and a same multimedia broadcast multicast service area MBMS service area;
if the cell in which the first user equipment is located and the cell in which the second user equipment is located are in the same SFN area and the same MBMS Service area, triggering execution of the switching a transmission manner of the streaming media resource from a unicast manner to a multicast manner; and
if the cell in which the first user equipment is located and the cell in which the second user equipment is located are in the same SFN area but are not in the same MBMS Service area, creating an MBMS Service area, incorporating the Cell ID of the cell in which the first user equipment is located and the Cell ID of the cell in which the second user equipment is located into the created MBMS Service area, and then triggering execution of the switching a transmission manner of the streaming media resource from a unicast manner to a multicast manner.

With reference to the fourth possible implementation manner of the fourth aspect, in a fifth possible implementation manner of the fourth aspect, the acquiring, according to the ID of the first user equipment, a cell identity Cell ID of the cell in which the first user equipment is located includes:
sending a Cell ID query message to a packet data network gateway P-GW or a policy and charging rules function PCRF according to the ID of the first user equipment, where the Cell ID query message includes the ID of the first user equipment; and
receiving Cell ID feedback information returned by the P-GW or the PCRF, where the Cell ID feedback information includes the Cell ID of the cell in which the first user equipment is located; and
the acquiring, according to the ID of the second user equipment, a cell identity Cell ID of the cell in which the second user equipment is located includes:
   sending a Cell ID query message to the packet data network gateway P-GW or the policy and charging rules function PCRF according to the ID of the second user equipment, where the Cell ID query message includes the ID of the second user equipment; and
   receiving Cell ID feedback information returned by the P-GW or the PCRF, where the Cell ID feedback information includes the Cell ID of the cell in which the second user equipment is located.

According to a fifth aspect, an embodiment of the present invention further provides a policy and charging rules function PCRF, including:
a receiving module, configured to receive a notification message reported by a proxy server, where the notification message includes that first user equipment and second user equipment separately access a same streaming media resource;
a multicast switch module, configured to switch a transmission manner of the streaming media resource from a unicast manner to a multicast manner; and
a sending module, configured to send combined group information to a broadcast multicast service center BM-SC, where the combined group information includes an Internet Protocol IP address of the first user equipment, an IP address of the second user equipment, and a download address of the streaming media resource; where
the sending module is further configured to send a notification response message to the proxy server, so that the proxy server learns that the BM-SC enables a multimedia broadcast multicast service MBMS service.

With reference to the fifth aspect, in a first possible implementation manner of the fifth aspect, the receiving module is further configured to receive file delivery table FDT instance information and user service description USD information that are sent by the BM-SC, where the FDT instance information is a result of encoding performed on the streaming media resource after the BM-SC acquires the streaming media resource according to the combined group information; and
the sending module is further configured to send the FDT instance information and the USD information to the proxy server.

With reference to the fifth aspect or the first possible implementation manner of the fifth aspect, in a second possible implementation manner of the fifth aspect, the PCRF further includes an acquiring module and a determining module, where
the acquiring module is configured to acquire the IP address of the first user equipment and the IP address of the second user equipment from the notification message;
the acquiring module is further configured to acquire an identity ID of the first user equipment and an ID of the second user equipment respectively according to the IP address of the first user equipment and the IP address of the second user equipment;
the determining module is configured to determine, according to the ID of the first user equipment and the ID of the second user equipment, whether the first user equipment and the second user equipment support the multimedia broadcast multicast service MBMS service; and
the determining module is further configured to trigger execution of the multicast switch module if the first user equipment and the second user equipment both support the MBMS service.

With reference to the fifth aspect, or the first or second possible implementation manner of the fifth aspect, in a third possible implementation manner of the fifth aspect, the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
the acquiring module is further configured to determine, based on the acquired congestion information of the cell in which the first user equipment is located, congestion information of the cell in which the second user equipment is located, quality of service QoS information of the first user equipment, and QoS information of the second user equipment, to trigger execution of the multicast switch module.

With reference to the fifth aspect, or the first or second or third possible implementation manner of the fifth aspect, in a fourth possible implementation manner of the fifth aspect, the PCRF further includes: a notification module, where
the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment, a cell identity Cell ID of the cell in which the first user equipment is located, and acquire, according to the ID of the second user equipment, a cell identity Cell ID of the cell in which the second user equipment is located;
the determining module is configured to query whether the Cell ID of the cell in which the first user equipment is located and the Cell ID of the cell in which the second user equipment is located are in a same single frequency network area SFN area and a same multimedia broadcast multicast service area MBMS service area;
the determining module is further configured to trigger execution of the multicast switch module if the cell in which the first user equipment is located and the cell in which the second user equipment is located are in the same SFN area and the same MBMS Service area;
the notification module is configured to instruct the BM-SC to create an MBMS Service area if the cell in which the first user equipment is located and the cell in which the second user equipment is located are in the same SFN area but are not in the same MBMS Service area; and
the notification module is further configured to trigger execution of the multicast switch module after instructing the BM-SC to create the MBMS Service area.

According to a sixth aspect, an embodiment of the present invention provides a proxy server, including:
a detection module, configured to detect download addresses of streaming media resources that are requested separately by first user equipment and second user equipment, and acquire that the first user equipment and the second user equipment separately access a same streaming media resource;
a sending module, configured to report a notification message to a policy and charging rules function PCRF or a broadcast multicast service center BM-SC, where the notification message includes that the first user equipment and the second user equipment separately access the same streaming media resource; and
an acquiring module, configured to acquire file delivery table FDT instance information and user service description USD information; where
the sending module is further configured to separately send multimedia broadcast multicast service MBMS service indication information to the first user equipment and the second user equipment, where the MBMS service indication information includes the FDT instance information and the USD information.

With reference to the sixth aspect, in a first possible implementation manner of the sixth aspect, the acquiring module is specifically configured to receive the FDT instance information and the USD information that are sent by the PCRF.

With reference to the sixth aspect, in a second possible implementation manner of the sixth aspect, the acquiring module includes:
an address sending submodule, configured to send a download address corresponding to the streaming media resource to the broadcast multicast service center BM-SC;
a resource acquiring submodule, configured to download the streaming media resource corresponding to the download address from a content server; or extract the streaming media resource corresponding to the download address from a local storage;
a resource sending submodule, configured to send the streaming media resource to the BM-SC, so that the BM-SC encodes the streaming media resource to generate the FDT instance information; and
a receiving submodule, configured to receive the FDT instance information and the USD information that are sent by the BM-SC.

With reference to the sixth aspect, or the first or second possible implementation manner of the sixth aspect, in a third possible implementation manner of the sixth aspect, the proxy server further includes: a query module, where
the query module is configured to query, by using user agency profile UAProf information, whether the first user equipment and the second user equipment support a multimedia broadcast multicast service MBMS service; and
the query module is further configured to trigger execution of the sending module if the first user equipment and the second user equipment both support the MBMS service.

With reference to the sixth aspect, or the first or second or third possible implementation manner of the sixth aspect, in a fourth possible implementation manner of the sixth aspect, the acquiring module is further configured to acquire a media presentation description file MPD from the content server, where the notification message further includes the MPD.

According to a seventh aspect, an embodiment of the present invention further provides a broadcast multicast service center BM-SC, including:
a receiving module, configured to receive combined group information reported by a policy and charging rules function PCRF, where the combined group information includes an Internet Protocol IP address of first user equipment, an IP address of second user equipment, and a download address of a streaming media resource, where the first user equipment and the second user equipment separately access a same streaming media resource;
an acquiring module, configured to acquire the streaming media resource according to the download address of the streaming media resource;
an encoding module, configured to encode the streaming media resource, to obtain file delivery table FDT instance information;
a generating module, configured to generate user service description USD information; and
a sending module, configured to send the FDT instance information and the USD information to the PCRF or a proxy server.

With reference to the seventh aspect, in a first possible implementation manner of the seventh aspect, the acquiring module is specifically configured to receive the streaming media resource corresponding to the download address and sent by the proxy server; or
the acquiring module is specifically configured to request, according to the download address, the streaming media resource corresponding to the download address from a content server, and receive the streaming media resource corresponding to the download address and returned by the content server.

With reference to the seventh aspect or the first possible implementation manner of the seventh aspect, in a second possible implementation manner of the seventh aspect, the combined group information further includes: a media presentation description file MPD; and
the acquiring module is further configured to acquire, according to the MPD, the streaming media resource corresponding to another download address than the foregoing download address in the MPD.

With reference to the seventh aspect or the first or second possible implementation manner of the seventh aspect, in a third possible implementation manner of the seventh aspect, the sending module is further configured to simultaneously send the streaming media resource to the first user equipment and the second user equipment according to a multimedia broadcast multicast service MBMS service.

With reference to the third possible implementation manner of the seventh aspect, in a fourth possible implementation manner of the seventh aspect, the sending module is specifically configured to send MBMS session information to a base station of a cell to which the first user equipment belongs and a base station of a cell to which the second user equipment belongs; and send the streaming media resource to the base station of the cell to which the first user equipment belongs and the base station of the cell to which the second user equipment belongs, so that the base station of the cell to which the first user equipment belongs sends the streaming media resource to the first user equipment and the base station of the cell to which the second user equipment belongs sends the streaming media resource to the second user equipment.

According to an eighth aspect, an embodiment of the present invention further provides a broadcast multicast service center BM-SC, including:
a receiving module, configured to receive a notification message reported by a proxy server, where the notification message includes that first user equipment and second user equipment separately access a same streaming media resource;
a multicast switch module, configured to switch a transmission manner of the streaming media resource from a unicast manner to a multicast manner; and
a sending module, configured to send a notification response message to the proxy server, so that the proxy server learns that the BM-SC enables a multimedia broadcast multicast service MBMS service.

With reference to the eighth aspect, in a first possible implementation manner of the eighth aspect, the BM-SC further includes:
an acquiring module, configured to acquire the streaming media resource according to a download address of the streaming media resource;
an encoding module, configured to encode the streaming media resource, to obtain file delivery table FDT instance information; and
a generating module, configured to generate user service description USD information; where
the sending module is further configured to send the FDT instance information and the USD information to the proxy server.

With reference to the eighth aspect or the first possible implementation manner of the eighth aspect, in a second possible implementation manner of the eighth aspect, the BM-SC further includes an acquiring module and a determining module, where
the acquiring module is configured to acquire an IP address of the first user equipment and an IP address of the second user equipment from the notification message;
the acquiring module is further configured to acquire an identity ID of the first user equipment and an ID of the second user equipment respectively according to the IP address of the first user equipment and the IP address of the second user equipment;
the determining module is configured to determine, according to the ID of the first user equipment and the ID of the second user equipment, whether the first user equipment and the second user equipment support the multimedia broadcast multicast service MBMS service; and
the determining module is further configured to trigger execution of the multicast switch module if the first user equipment and the second user equipment both support the MBMS service.

With reference to the eighth aspect, or the first or second possible implementation manner of the eighth aspect, in a third possible implementation manner of the eighth aspect, the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
the acquiring module is further configured to determine, based on the acquired congestion information of the cell in which the first user equipment is located, congestion information of the cell in which the second user equipment is located, quality of service QoS information of the first user equipment, and QoS information of the second user equipment, to trigger execution of the multicast switch module.

With reference to the eighth aspect, or the first or second or third possible implementation manner of the eighth aspect, in a fourth possible implementation manner of the eighth aspect, the BM-SC further includes: a query module and a creating module, where
the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment, a cell identity Cell ID of the cell in which the first user equipment is located, and acquire, according to the ID of the second user equipment, a cell identity Cell ID of the cell in which the second user equipment is located;
the query module is configured to query whether the Cell ID of the cell in which the first user equipment is located and the Cell ID of the cell in which the second user equipment is located are in a same single frequency network area SFN area and a same multimedia broadcast multicast service area MBMS service area;
the query module is further configured to trigger execution of the multicast switch module if the cell in which the first user equipment is located and the cell in which the second user equipment is located are in the same SFN area and the same MBMS Service area; and
the creating module is configured to: if the cell in which the first user equipment is located and the cell in which the second user equipment is located are in the same SFN area but are not in the same MBMS Service area, create an MBMS Service area, incorporate the Cell ID of the cell in which the first user equipment is located and the Cell ID of the cell in which the second user equipment is located into the created MBMS Service area, and then trigger execution of the multicast switch module.

With reference to the fourth possible implementation manner of the eighth aspect, in a fifth possible implementation manner of the eighth aspect, the acquiring module is specifically configured to send a Cell ID query message to a packet data network gateway P-GW or a policy and charging rules function PCRF according to the ID of the first user equipment, where the Cell ID query message includes the ID of the first user equipment; receive Cell ID feedback information returned by the P-GW or the PCRF, where the Cell ID feedback information includes the Cell ID of the cell in which the first user equipment is located; send a Cell ID query message to the packet data network gateway P-GW or the policy and charging rules function PCRF according to the ID of the second user equipment, where the Cell ID query message includes the ID of the second user equipment; and receive Cell ID feedback information returned by the P-GW or the PCRF, where the Cell ID feedback information includes the Cell ID of the cell in which the second user equipment is located.

According to a ninth aspect, an embodiment of the present invention further provides a multimedia broadcast multicast service MBMS system, including: the policy and charging rules function PCRF described in any implementation manner of the fifth aspect, the proxy server described in any implementation manner of the sixth aspect, the broadcast multicast service center BM-SC described in any implementation manner of the seventh aspect, first user equipment, and second user equipment, where
the PCRF is separately connected to the BM-SC and the proxy server in a communicable manner.

With reference to the ninth aspect, in a first possible implementation manner of the ninth aspect, the PCRF is connected to the proxy server by using an Rx interface, and the PCRF is connected to the BM-SC by using a V3 interface.

With reference to the ninth aspect or the first possible implementation manner of the ninth aspect, in a second possible implementation manner of the ninth aspect, the proxy server is connected to the BM-SC by using a V1 interface and a V2 interface.

According to a tenth aspect, an embodiment of the present invention further provides a multimedia broadcast multicast service MBMS system, including: the proxy server described in any implementation manner of the sixth aspect, the broadcast multicast service center BM-SC described in any implementation manner of the eighth aspect, first user equipment, and second user equipment, where
the BM-SC is connected to the proxy server in a communicable manner.

It can be seen from the foregoing technical solutions that, the embodiments of the present invention have the following advantages:

In some embodiments of the present invention, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

In some other embodiments of the present invention, after receiving a notification message reported by a proxy server, a BM-SC switches a transmission manner of a streaming media resource from a unicast manner to a multicast manner, and then notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable an MBMS service and receive the streaming media resource, thereby implementing switching of streaming media resource transmission from unicast to multicast, and reducing backhaul link resources of a core network and air interface resources of a base station.

### BRIEF DESCRIPTION OF DRAWINGS

FIG. 1 is a schematic block diagram of a process of a method for supporting multicast of streaming media according to an embodiment of the present invention;
FIG. 2 is a schematic block diagram of a process of another method for supporting multicast of streaming media according to an embodiment of the present invention;
FIG. 3 is a schematic block diagram of a process of another method for supporting multicast of streaming media according to an embodiment of the present invention;
FIG. 4 is a schematic block diagram of a process of another method for supporting multicast of streaming media according to an embodiment of the present invention;
FIG. 5 is a schematic diagram of an application scenario of a PCRF, a proxy server, and a BM-SC according to an embodiment of the present invention;
FIG. 6 is a schematic flowchart of a method for switching from unicast to multicast according to an embodiment of the present invention;
FIG. 7 is a schematic flowchart of another method for switching from unicast to multicast according to an embodiment of the present invention;
FIG. 8 is a schematic diagram of an application scenario of a proxy server and a BM-SC according to an embodiment of the present invention;
FIG. 9 is a schematic flowchart of another switch method from a unicast to a multicast according to an embodiment of the present invention;
FIG. 10-a is a schematic structural diagram of composition of a PCRF according to an embodiment of the present invention;

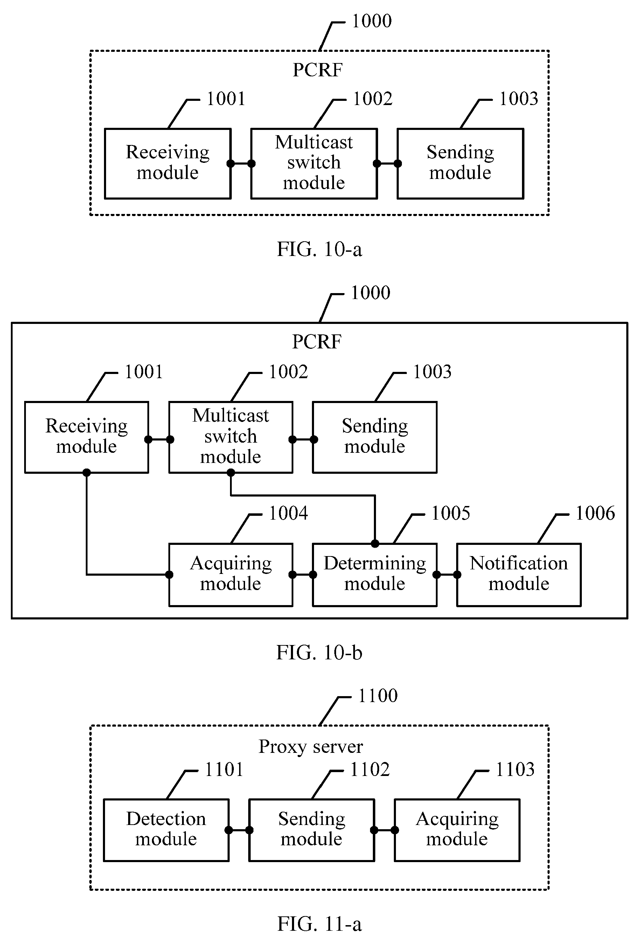

FIG. 10-b is a schematic structural diagram of composition of another PCRF according to an embodiment of the present invention;

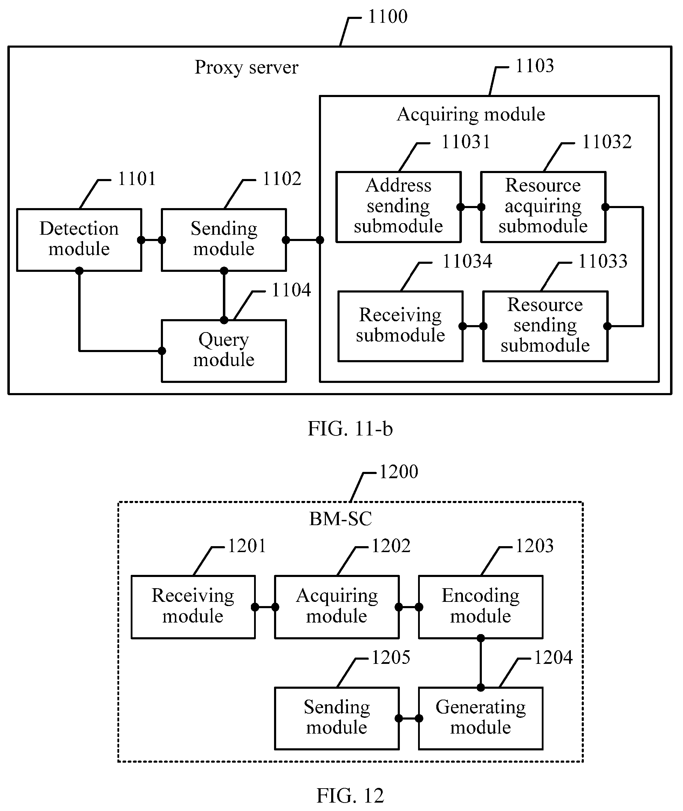

FIG. 11-a is a schematic structural diagram of composition of a proxy server according to an embodiment of the present invention;
FIG. 11-b is a schematic structural diagram of composition of a proxy server according to an embodiment of the present invention;
FIG. 12 is a schematic structural diagram of composition of a BM-SC according to an embodiment of the present invention;

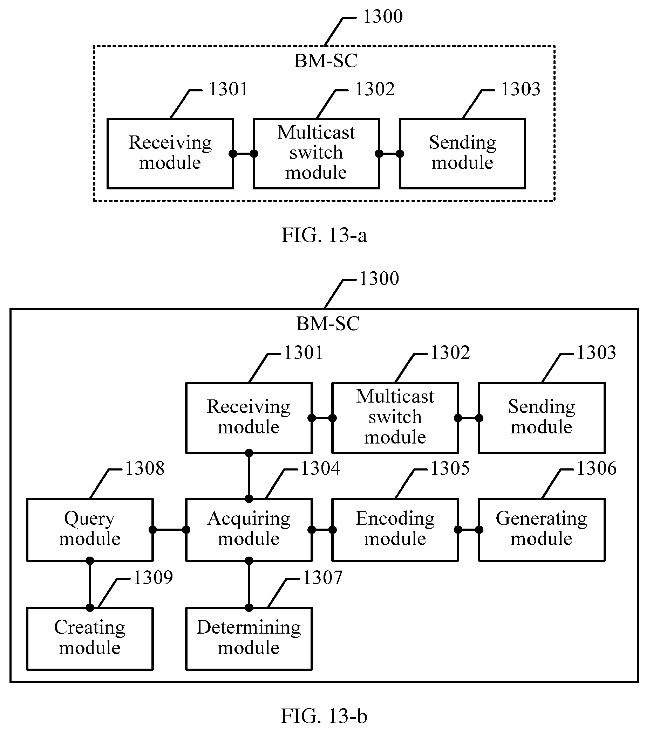

FIG. 13-a is a schematic structural diagram of composition of another BM-SC according to an embodiment of the present invention;
FIG. 13-b is a schematic structural diagram of composition of another BM-SC according to an embodiment of the present invention;

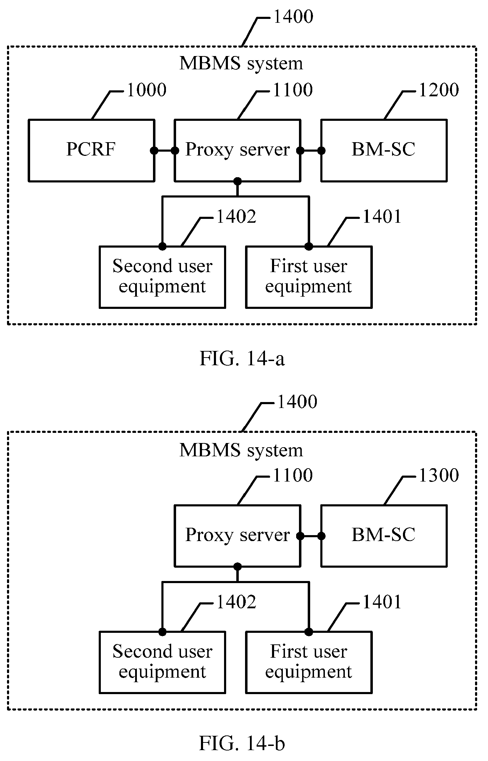

FIG. 14-a is a schematic structural diagram of composition of an MBMS system according to an embodiment of the present invention;
FIG. 14-b is a schematic structural diagram of composition of another MBMS system according to an embodiment of the present invention;

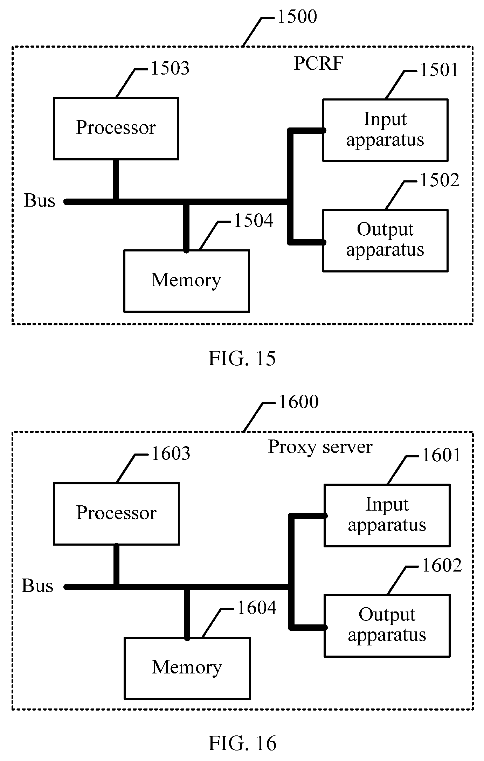

FIG. 15 is a schematic structural diagram of composition of another PCRF according to an embodiment of the present invention;
FIG. 16 is a schematic structural diagram of composition of another proxy server according to an embodiment of the present invention; and

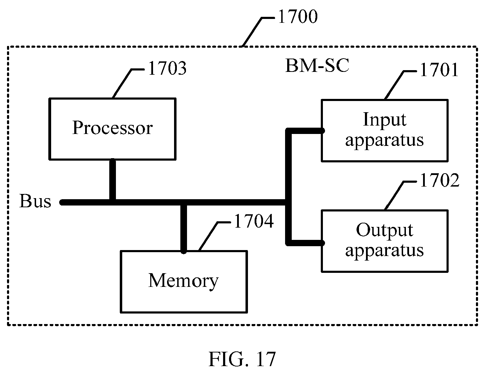

FIG. 17 is a schematic structural diagram of composition of another BM-SC according to an embodiment of the present invention.

### DESCRIPTION OF EMBODIMENTS

Embodiments of the present invention provide a method for supporting multicast of streaming media, and a related apparatus and system, which can implement switching from unicast to multicast in a service playback process, and reduce backhaul link resources of a core network and air interface resources of a base station.

In order to make the objectives, technical solutions, and advantages of the present invention more comprehensible, the technical solutions according to the embodiments of the present invention are clearly and completely described in the following with reference to the accompanying drawings. Apparently, the embodiments in the following description are merely a part rather than all of the embodiments of the present invention. All other embodiments obtained by a person of ordinary skill in the art based on the embodiments of the present invention without creative efforts shall fall within the protection scope of the present invention.

In the specification, claims, and the foregoing accompanying drawings of the present invention, the terms "first", "second", "third", "fourth", and the like are used to distinguish similar objects, and are not necessarily used for describing a specific order or sequence. It should be understood that, the terms used in this manner can be interchanged, so that the embodiments of the present invention described herein can be implemented, for example, in other sequences than those shown or described herein. In addition, the terms "include", "contain" or any other variation thereof, are intended to cover a non-exclusive inclusion, for example, a process, a method, a system, a product or a device that includes a series of steps or units is not limited to including only those explicitly listed steps or units but may include other steps or units that are not explicitly listed, or inherent to the process, method, product, or device.

Detailed descriptions are separately given below.

In an embodiment of a method for supporting multicast of streaming media according to the present invention, the method may include: receiving a notification message reported by a proxy server, where the notification message includes that first user equipment and second user equipment separately access a same streaming media resource; switching a transmission manner of the streaming media resource from a unicast manner to a multicast manner; sending combined group information to a broadcast multicast service center (BM-SC, Broadcast Multicast Service Centre), where the combined group information includes an Internet Protocol (IP, Internet Protocol) address of the first user equipment, an IP address of the second user equipment, and a download address of the streaming media resource; and sending a notification response message to the proxy server, so that the proxy server learns that the BM-SC enables a multimedia broadcast multicast service (MBMS, Multimedia Broadcast Multicast Service) service.

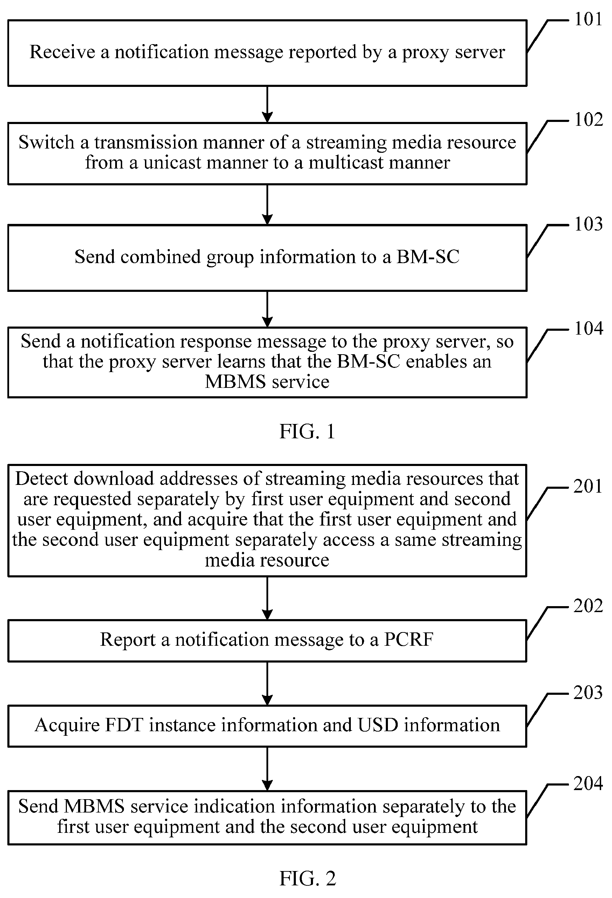

Referring to FIG. 1, a method for supporting multicast of streaming media according to an embodiment of the present invention may include:

101. Receive a notification message reported by a proxy server.

The notification message includes that first user equipment and second user equipment separately access a same streaming media resource.

In this embodiment of the present invention, when the proxy server detects that multiple user equipments access a same streaming media resource, the proxy server may report the notification message to a policy and charging rules function (PCRF, Policy charging and rules function). For ease of description in subsequent embodiments, description is given by using an example in which two user equipments access a same streaming media resource, where the two user equipments are specifically the first user equipment and the second user equipment. In an actual application, it may also be that three or more user equipments access a same streaming media resource, which is provided merely for description herein. The multiple user equipments that access the same streaming media resource may be located in a same cell (Cell), or may also be located in different cells, as long as these user equipments are within the coverage of an MBMS network.

In some embodiments of the present invention, the PCRF may receive the notification message reported by the proxy server, the PCRF may learn according to the notification message that the first user equipment and the second user equipment access a same streaming media resource, where that the first user equipment and the second user equipment access a same streaming media resource may be specifically that a uniform resource locator (URL, Uniform Resource Locator) requested by the first user equipment and a URL requested by the second user equipment are the same. For example, a download address of a streaming media resource that is requested by the first user equipment is "Segment#n url", and when a download address of a streaming media resource that is requested by the second user equipment is "Segment#n url", it may be determined that the first user equipment and the second user equipment assess the same streaming media resource at the same time.

In some embodiments of the present invention, after the receiving a notification message sent by a proxy server, the following steps may be further performed: acquiring an IP address of the first user equipment and an IP address of the second user equipment from the notification message; acquiring an identity (ID, Identity) of the first user equipment and an ID of the second user equipment respectively according to the IP address of the first user equipment and the IP address of the second user equipment; determining, according to the ID of the first user equipment and the ID of the second user equipment, whether the first user equipment and the second user equipment support an MBMS service; and if the first user equipment and the second user equipment both support the MBMS service, triggering execution of step 102 of switching a transmission manner of the streaming media resource from a unicast manner to a multicast manner.

The PCRF may acquire the IP address of the first user equipment and the IP address of the second user equipment from the notification message, and may obtain the ID of the first user equipment and the ID of the second user equipment by using a mapping relationship between an IP address and an ID of user equipment; and then, may acquire a subscription profile of a user from an SPR (Subscription Profile Repository, subscription profile repository) by using the IDs as parameters. In this way, it can be determined whether the first user equipment and the second user equipment support the MBMS service. A subsequent process is triggered to proceed, only when the first user equipment and the second user equipment both support the MBMS service. If at least one of the first user equipment and the second user equipment does not support the MBMS service, the subsequent process is terminated, and switching from unicast to multicast is not performed.

In some other embodiments of the present invention, after the receiving a notification message reported by a proxy server, the following steps may be further performed: acquiring an IP address of the first user equipment and an IP address of the second user equipment from the notification message; acquiring an ID of the first user equipment and an ID of the second user equipment respectively according to the IP address of the first user equipment and the IP address of the second user equipment; acquiring, according to the ID of the first user equipment and the ID of the second user equipment, congestion information of a cell in which the first user equipment is located, congestion information of a cell in which the second user equipment is located, quality of service (QoS, Quality of Service) information of the first user equipment, and QoS information of the second user equipment; and determining, based on the acquired congestion information of the cell in which the first user equipment is located, congestion information of the cell in which the second user equipment is located, QoS information of the first user equipment, and QoS information of the second user equipment, to trigger execution of step 102 of switching a transmission manner of the streaming media resource from a unicast manner to a multicast manner.

After the PCRF acquires the subscription profile of the user from the SPR, the PCRF triggers, according to congestion information of a cell in which the user is located and QoS information, a subsequent process to proceed, only when the congestion information and the QoS information meet threshold conditions. If the foregoing information does not meet the threshold conditions, the subsequent process is terminated, and switching from unicast to multicast is not performed. The PCRF sets the threshold conditions for the congestion information and the QoS information, and the switching from unicast to multicast is performed only when the threshold conditions are met, thereby ensuring transmission of a streaming media resource and improving user experience.

It should be noted that, in this embodiment of the present invention, the congestion information is mainly used for determining, a multicast code rate level of a video, used after the transmission manner is switched to multicast. For example, a video is classified into a high-resolution file, a medium-resolution file, and a low-resolution file; when congestion is heavy, the low-resolution file is transmitted in the multicast manner; when congestion is moderate, the medium-resolution file is transmitted in the multicast manner; when the congestion information indicates mild congestion, the high-resolution file is transmitted in the multicast manner.

In some embodiments of the present invention, after the receiving a notification message reported by a proxy server, the method may further include the following steps:
acquiring the IP address of the first user equipment and the IP address of the second user equipment from the notification message;
acquiring an ID of the first user equipment and an ID of the second user equipment respectively according to the IP address of the first user equipment and the IP address of the second user equipment;
acquiring, according to the ID of the first user equipment, a cell identity (Cell ID for short) of a cell in which the first user equipment is located, and acquiring, according to the ID of the second user equipment, a Cell ID of a cell in which the second user equipment is located;
querying whether the Cell ID of the cell in which the first user equipment is located and the Cell ID of the cell in which the second user equipment is located are in a same single frequency network area (SFN area, Single Frequency Network area) and a same multimedia broadcast multicast service MBMS service area (MBMS service area for short);
if the cell in which the first user equipment is located and the cell in which the second user equipment is located are in the same SFN area and the same MBMS Service area, triggering execution of step 102 of switching a transmission manner of the streaming media resource from a unicast manner to a multicast manner; and
if the cell in which the first user equipment is located and the cell in which the second user equipment is located are in the same SFN area but are not in the same MBMS Service area, instructing a BM-SC to create an MBMS Service area, and then triggering execution of step 102 of switching a transmission manner of the streaming media resource from a unicast manner to a multicast manner.

It should be noted that, actions in the foregoing steps may be executed by the PCRF. The querying, by the PCRF, whether the Cell ID of the cell in which the first user equipment is located and the Cell ID of the cell in which the second user equipment is located are in a same SFN area and a same MBMS service area may be implemented in the following manner: querying, by the PCRF from the BM-SC, whether the Cell ID of the cell in which the first user equipment is located and the Cell ID of the cell in which the second user equipment is located are in the same SFN area and the same MBMS service area, where a table showing a correspondence between a Cell ID and an SFN area and a correspondence between the Cell ID and an MBMS service area is pre-configured in the BM-SC. Certainly, the PCRF may also pre-configure the table showing a correspondence between a Cell ID and an SFN area and a correspondence between the Cell ID and an MBMS service area, that is, the PCRF can complete the foregoing determining process without interacting with the BM-SC.

102. Switch a transmission manner of the streaming media resource from a unicast manner to a multicast manner.

In this embodiment of the present invention, the PCRF learns, according to the notification message reported by the proxy server, that multiple user equipments access a same streaming media resource, and the PCRF may switch the transmission manner of the streaming media resource from the unicast manner to the multicast manner. The PCRF serves as a decision point of an on-demand multimedia broadcast multicast (on-demand MBMS) session, and when multiple user equipments access a same streaming media resource, makes a decision of switching from unicast to multicast; and then notifies the BM-SC, so that the BM-SC enables an MBMS service.

It should be noted that, in this embodiment of the present invention, when the transmission manner of the streaming media resource is switched from the unicast manner to the multicast manner, parameters that need to be set include: a quantity of users that request the same streaming media resource (that is, the same URL). The quantity of the users that request the same streaming media resource is compared with a preset threshold, and if the quantity exceeds the threshold, switching from the unicast manner to the multicast manner is activated. In addition, the parameters that need to be set may further include: an average signal-to-noise ratio of the user equipments that request the same streaming media resource (that is, the same URL). The average signal-to-noise ratio is compared with a preset threshold, and if the average signal-to-noise ratio exceeds the threshold, switching from the unicast manner to the multicast manner is activated.

103. Send combined group information to a BM-SC.

The combined group information includes the IP address of the first user equipment, the IP address of the second user equipment, and a download address of the streaming media resource.

In this embodiment of the present invention, after the PCRF makes the decision of switching the transmission manner of the streaming media resource from the unicast manner to the multicast manner, the PCRF sends the combined group information to the BM-SC; after receiving the combined group information, the BM-SC may learn that the streaming media resource can be sent in an MBMS service manner to the first user equipment and the second user equipment that are included in the combined group information.

In some embodiments of the present invention, the combined group information sent by the PCRF to the BM-SC includes IP addresses of multiple user equipments that can be combined into a group, and download addresses of a streaming media resource that is accessed by the multiple user equipments; and may further include IDs of the multiple user equipments.

In some embodiments of the present invention, after the sending the combined group information to the BM-SC, the following steps may be further performed: receiving file delivery table (FDT, File Delivery Table) instance information and user service description (USD, User Service Description) information that are sent by the BM-SC, where the FDT instance information is a result of encoding performed on the streaming media resource after the BM-SC acquires the streaming media resource according to the combined group information; and sending the FDT instance information and the USD information to the proxy server.

After the BM-SC generates the FDT instance information and the USD information, the BM-SC sends the FDT instance information and the USD information to the PCRF; after receiving the FDT instance information and the USD information, the PCRF may forward the information to the proxy server; and the proxy server then forwards the information to the first user equipment and the second user equipment. The user equipments may acquire, by using the FDT instance information and the USD information, the streaming media resource requested by the user equipments. Then, users can watch video program content by using the MBMS service.

104. Send a notification response message to the proxy server, so that the proxy server learns that the BM-SC enables an MBMS service.

In this embodiment of the present invention, after sending the combined group information to the BM-SC, the PCRF sends the notification response message to the proxy server, and the proxy server may learn, after receiving the notification response message, that the BM-SC enables the MBMS service.

In this embodiment of the present invention, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

Another embodiment of the method for supporting multicast of streaming media according to the present invention may include: detecting download addresses of streaming media resources that are requested separately by first user equipment and second user equipment, and acquiring that the first user equipment and the second user equipment separately access a same streaming media resource; reporting a notification message to a PCRF or a BM-SC, where the notification message includes that the first user equipment and the second user equipment separately access a same streaming media resource; acquiring FDT instance information and USD information; and sending the FDT instance information and the USD information separately to the first user equipment and the second user equipment.

Referring to FIG. 2, a method for supporting multicast of streaming media according to another embodiment of the present invention may include the following steps:

201. Detect download addresses of streaming media resources that are requested separately by first user equipment and second user equipment, and acquire that the first user equipment and the second user equipment separately access a same streaming media resource.

In this embodiment of the present invention, a proxy server may detect streaming media resources that are requested by multiple user equipments, and if download addresses of the streaming media resources accessed by the multiple user equipments are the same, it indicates that the multiple user equipments assess a same streaming media resource at the same time. For example, the proxy server may perform a DASH service event detection, and detect, by using URLs requested by multiple user equipments, that the multiple user equipments access a same streaming media resource at the same time.

In some embodiments of the present invention, the proxy server may specifically be a Dynamic Adaptive Streaming over HTTP proxy (DASH Proxy), or may be an AF (Application Function, application function) entity in a policy and charging control (PCC, Policy and charging control) architecture, where the AF entity may be connected to the PCRF by using an Rx interface.

In some embodiments of the present invention, after the detecting download addresses of streaming media resources that are requested separately by first user equipment and second user equipment, the method may further include the following steps: querying, by using user agency profile (UAProf, User Agency Profile) information, whether the first user equipment and the second user equipment support an MBMS service; and if the first user equipment and the second user equipment both support the MBMS service, triggering execution of step 202 of reporting a notification message to a PCRF.

The proxy server may query, by using the UAProf information provided by the user equipments, whether terminals support the MBMS service. If the terminals do not support the MBMS service, the proxy server does not need to perform subsequent steps.

202. Report a notification message to a PCRF or a BM-SC.

The notification message includes that the first user equipment and the second user equipment separately access a same streaming media resource.

In some embodiments of the present invention, when detecting that multiple user equipments access the same streaming media resource, the proxy server reports the notification message to the PCRF, or the proxy server may report the notification message to the BM-SC when detecting that multiple user equipments access the same streaming media resource. For ease of description in subsequent embodiments, description is given by using an example in which two user equipments access a same streaming media resource, where the two user equipments are specifically the first user equipment and the second user equipment. In an actual application, it may also be that three or more user equipments access a same streaming media resource, which is provided merely for description herein. The multiple user equipments that access the same streaming media resource may be located in a same cell (Cell), or may also be located in different cells, as long as these user equipments are within the coverage of an MBMS network.

In some embodiments of the present invention, after the reporting a notification message to a PCRF, the following step may be further executed: acquiring a media presentation description (MPD, Media Presentation Description) file from a content server (Content Server); in this case, the notification message sent by the proxy server to the PCRF further includes the MPD. Certainly, in this embodiment of the present invention, a manner of acquiring the MPD by the proxy server is not limited thereto, and the MPD may also be acquired before it is detected that the first user equipment and the second user equipment separately access the same streaming media resource, for example, the proxy server may acquire the MPD from a DASH server in advance. The DASH server generates different representations (Representation) with different code rates for the same streaming media file, where each representation includes multiple segments (Segment), and each segment generally lasts for several seconds or more than ten seconds; the user equipment selects segments of different representations according to a current network transmission status. The "representations" and the "segments" of the streaming media are described in the MPD file. After acquiring the MPD file, the UE may select a certain representation of the streaming media according to a current network status, and acquire, by using a request, a media stream corresponding to a certain segment.

203. Acquire FDT instance information and USD information.

In this embodiment of the present invention, after the proxy server reports the notification message to the PCRF, the PCRF switches a transmission manner of the streaming media resource from a unicast manner to a multicast manner, sends combined group information to the BM-SC, and receives the FDT instance information and the USD information that are sent by the BM-SC. Then, that the proxy server acquires FDT instance information and USD information may specifically include that: the proxy server receives the FDT instance information and the USD information that are sent by the PCRF to the proxy server.

When the proxy server is not connected to the BM-SC, it can be known from the foregoing content that the proxy server may receive the FDT instance information and the USD information from the PCRF. In some other embodiments of the present invention, the proxy server may also be connected to the BM-SC. For example, the proxy server may be connected to the BM-SC by using a V1 interface and a V2 interface. Then, the acquiring FDT instance information and USD information may specifically include the following steps: sending a download address corresponding to the streaming media resource to the BM-SC; downloading the streaming media resource corresponding to the download address from the content server, or extracting the streaming media resource corresponding to the download address from a local storage; and sending the streaming media resource to the BM-SC, so that the BM-SC encodes the streaming media resource to generate the file delivery table instance information; and receiving the FDT instance information and the USD information that are sent by the BM-SC.

The proxy server is connected to the BM-SC, and the proxy server sends the download address corresponding to the streaming media resource to the BM-SC; then, the BM-SC may download streaming media content from a server according to the download address. Moreover, the proxy server may further send the MPD to the BM-SC. The proxy server searches, according to the download address corresponding to the streaming media resource, the local storage to check whether the local storage stores the streaming media resource corresponding to the download address; if the streaming media resource corresponding to the download address is stored locally, the proxy server sends the streaming media resource to the BM-SC; and if the streaming media resource corresponding to the download address is not stored locally, the proxy server initiates a downloading request from the content server, downloads the streaming media resource corresponding to the download address from the content server, stores the streaming media resource in the local storage, and sends the streaming media resource to the BM-SC; after generating the FDT instance information and the USD information, the BM-SC sends the FDT instance information and the USD information to the proxy server.

204. Send MBMS service indication information separately to the first user equipment and the second user equipment.

The MBMS service indication information includes the FDT instance information and the USD information.

In this embodiment of the present invention, after the proxy server acquires the FDT instance information and the USD information, the proxy server sends the MBMS service indication information separately to the first user equipment and the second user equipment, so as to notify the first user equipment and the second user equipment that a multimedia resource will be sent by the BM-SC by using an MBMS service; and the the MBMS service indication information contains the FDT instance information and the USD information, so that the first user equipment and the second user equipment can perform decoding to obtain video stream content, thereby meeting a user requirement of watching video program content.

In this embodiment of the present invention, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

Another embodiment of a method for supporting multicast of streaming media according to the present invention may include: receiving combined group information reported by a PCRF, where the combined group information includes an IP address of first user equipment, an IP address of second user equipment, and a download address of a streaming media resource, and the first user equipment and the second user equipment separately access a same streaming media resource; acquiring the streaming media resource according to the download address of the streaming media resource; encoding the streaming media resource, to obtain FDT instance information; generating USD information; and sending the FDT instance information and the USD information to the PCRF or a proxy server.

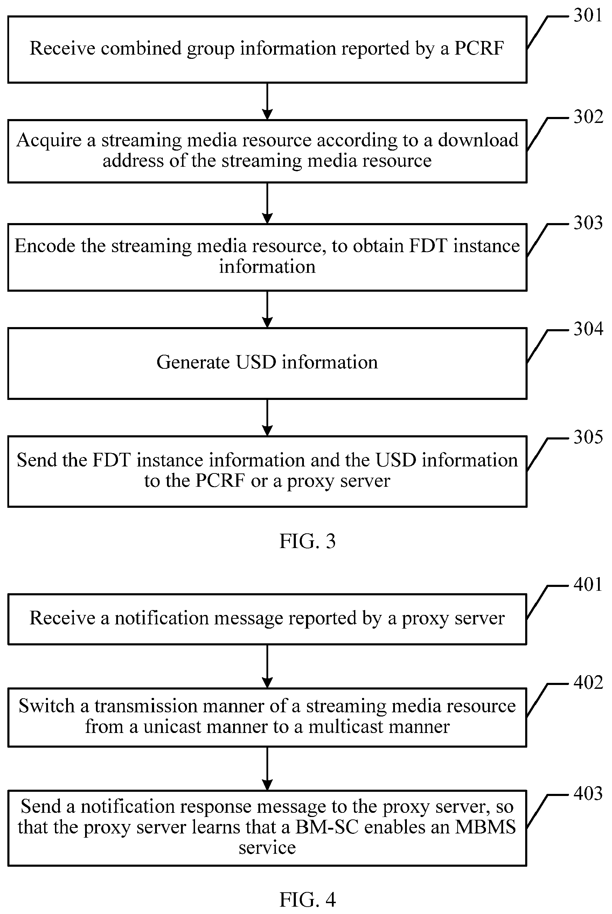

Referring to FIG. 3, a method for supporting multicast of streaming media according to another embodiment of the present invention may include the following steps:

301. Receive combined group information reported by a PCRF.

The combined group information includes an IP address of first user equipment, an IP address of second user equipment, and a download address of a streaming media resource, and the first user equipment and the second user equipment separately access a same streaming media resource.

In this embodiment of the present invention, a proxy server detects streaming media resources that are requested by multiple user equipments, and if download addresses of the streaming media resources accessed by the multiple user equipments are the same, it indicates that the multiple user equipments assess a same streaming media resource at the same time. The proxy server reports a notification message to the PCRF, so as to notify the PCRF that the first user equipment and the second user equipment separately access the same streaming media resource. The PCRF makes a decision of switching a transmission manner of the streaming media resource from a unicast to a multicast, and then the PCRF reports the combined group information to a BM-SC. When the BM-SC receives the combined group information reported by the PCRF, the BM-SC learns that a streaming media resource can be sent to the first user equipment and the second user equipment by using an MBMS service. According to the description in the foregoing embodiments, if the combined group information includes multiple user equipments, the BM-SC also needs to transmit the streaming media resource to the multiple user equipments by using the MBMS service.

302. Acquire a streaming media resource according to a download address of the streaming media resource.

In this embodiment of the present invention, after receiving the combined group information, the BM-SC extracts the download address of the streaming media resource from the combined group information, and the BM-SC acquires, according to the download address, the streaming media resource corresponding to the download address. The acquiring the streaming media resource according to the download address of the streaming media resource may specifically include: receiving the streaming media resource corresponding to the download address and sent by the proxy server. That is, if the BM-SC is connected to the proxy server, the BM-SC may acquire the streaming media resource corresponding to the download address from the side of the proxy server. In addition, the acquiring the streaming media resource according to the download address of the streaming media resource may also be implemented in the following manner: requesting, according to the download address, the streaming media resource corresponding to the download address from a content server, and receiving the streaming media resource corresponding to the download address and returned by the content server. That is, the BM-SC may further directly download the streaming media resource from the content server.

In some other embodiments of the present invention, the combined group information sent by the PCRF to the BM-SC may further include: a media presentation description file MPD. Then, after the acquiring the streaming media resource according to the download address of the streaming media resource, the method may further include the following step: acquiring, according to the MPD, the streaming media resource corresponding to another download address than the foregoing download address in the MPD.

For example, if the download address of the streaming media resource requested by the first user equipment and the second user equipment is "Segment#n url", the MPD further includes other download addresses after "Segment#n url", such as "Segment#(n+1) url" and "Segment#(n+2) url". According to the manner of acquiring the streaming media resource in the foregoing description, the BM-SC may successively acquire the streaming media resources corresponding to the download addresses after "Segment#n url", till the end of MPD content. In this way, user equipment only needs to request once, and a complete streaming media resource can be downloaded, thereby improving resource transmission efficiency.

303. Encode the streaming media resource, to obtain FDT instance information.

In this embodiment of the present invention, after the BM-SC acquires the streaming media resource, the BM-SC may encode the streaming media resource, to obtain the FDT instance information. There are multiple manners of encoding the streaming media resource by the BM-SC, for example, the BM-SC may perform flute (flute) encoding or may use another encoding manner. Reference may be made to encoding manners in the prior art for the encoding of the streaming media resource in this embodiment of the present invention, and details are not described herein again.

### 304. Generate USD information.

In this embodiment of the present invention, the BM-SC may dynamically construct the USD information for the acquired streaming media resource, where the USD information includes a start time (start time) of an MBMS service that can be selected by a user, service duration (duration) of the MBMS service, an MBMS service area identity list (MBMS SAI list), and one or more frequencies at which the MBMS service is played.

It should be noted that, step 303 and step 304 may be performed at the same time, or step 303 is first performed and then step 304 is performed, or step 304 is first performed and then step 303 is performed, which is provided merely for description herein and is not limited herein.

305. Send the FDT instance information and the USD information to the PCRF or a proxy server.

In this embodiment of the present invention, after the BM-SC generates the FDT instance information and the USD information, the BM-SC sends the FDT instance information and the USD information to the PCRF; if the BM-SC is connected to the proxy server, the BM-SC may also send the FDT instance information and the USD information to the proxy server.

In some embodiments of the present invention, after the sending the FDT instance information and the USD information to the PCRF or a proxy server, the method may further include the following step: simultaneously sending the streaming media resource to the first user equipment and the second user equipment according to the MBMS service. The simultaneously sending, by the BM-SC, the streaming media resource to the first user equipment and the second user equipment according to the MBMS service may specifically include: if cell identities (cell ID) of the first user equipment and the second user equipment are the same, sending, by the BM-SC, the streaming media resource to a base station of a cell to which the first user equipment and the second user equipment belong, and then sending, by the base station, the streaming media resource to the first user equipment and the second user equipment. If the first user equipment and the second user equipment belong to different cells, the first user equipment and the second user equipment may perform switching from unicast to multicast. The simultaneously sending the streaming media resource to the first user equipment and the second user equipment according to the MBMS service may specifically include the following steps: sending MBMS session information to a base station of a cell to which the first user equipment belongs and a base station of a cell to which the second user equipment belongs; and sending the streaming media resource to the base station of the cell to which the first user equipment belongs and the base station of the cell to which the second user equipment belongs, so that the base station of the cell to which the first user equipment belongs sends the streaming media resource to the first user equipment and the base station of the cell to which the second user equipment belongs sends the streaming media resource to the second user equipment.

After receiving the streaming media resource from the BM-SC, the user equipments may acquire a file delivery object from the received streaming media resource according to the FDT instance information, perform flute decoding on the file delivery object, and then transmit, according to the USD information, content obtained after the flute decoding to a video stream decoder for decoding, to obtain video stream content; and present the video stream content to the user, thereby meeting a use requirement of watching the video stream content.

In this embodiment of the present invention, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

In the embodiment shown in FIG. 1 of the present invention, a PCRF makes a decision of switching a transmission manner of a streaming media resource from a unicast manner to a multicast manner; the following introduces another embodiment of the present invention, in which a BM-SC makes a decision of switching a transmission manner of a streaming media resource from a unicast manner to a multicast manner. Referring to FIG. 4, this embodiment may include the following steps:

401. Receive a notification message reported by a proxy server.

The notification message includes that first user equipment and second user equipment separately access a same streaming media resource.

In this embodiment of the present invention, when the proxy server detects that multiple user equipments access a same streaming media resource, the proxy server reports the notification message to a BM-SC, and the BM-SC acquires from the proxy server that the first user equipment and the second user equipment separately access the same streaming media resource. For ease of description in subsequent embodiments, description is given by using an example in which two user equipments access a same streaming media resource, where the two user equipments are specifically the first user equipment and the second user equipment. In an actual application, it may also be that three or more user equipments access a same streaming media resource, which is provided merely for description herein. The multiple user equipments that access the same streaming media resource may be located in a same cell (Cell), or may also be located in different cells, as long as these user equipments are within the coverage of an MBMS network.

In some embodiments of the present invention, the BM-SC may receive the notification message reported by the proxy server, the PCRF may learn according to the notification message that the first user equipment and the second user equipment access a same streaming media resource, where that the first user equipment and the second user equipment access a same streaming media resource may be specifically that a URL requested by the first user equipment and a URL requested by the second user equipment are the same. For example, a download address of a streaming media resource that is requested by the first user equipment is "Segment#n url", and when a download address of a streaming media resource that is requested by the second user equipment is "Segment#n url", it may be determined that the first user equipment and the second user equipment assess the same streaming media resource at the same time.

In some embodiments of the present invention, after the receiving a notification message sent by a proxy server, the following steps may be further performed: acquiring an IP address of the first user equipment and an IP address of the second user equipment from the notification message; acquiring an ID of the first user equipment and an ID of the second user equipment respectively according to the IP address of the first user equipment and the IP address of the second user equipment; determining, according to the ID of the first user equipment and the ID of the second user equipment, whether the first user equipment and the second user equipment support an MBMS service; and if the first user equipment and the second user equipment both support the MBMS service, triggering execution of step 102 of switching a transmission manner of the streaming media resource from a unicast manner to a multicast manner.

The BM-SC may acquire the IP address of the first user equipment and the IP address of the second user equipment from the notification message, and may obtain the ID of the first user equipment and the ID of the second user equipment by using a mapping relationship between an IP address and an ID of user equipment; and then, may acquire a subscription profile of a user from an SPR by using the IDs as parameters. In this way, it can be determined whether the first user equipment and the second user equipment support the MBMS service. A subsequent process is triggered to proceed, only when the first user equipment and the second user equipment both support the MBMS service. If at least one of the first user equipment and the second user equipment does not support the MBMS service, the subsequent process is terminated, and switching from unicast to multicast is not performed.

In some other embodiments of the present invention, after the receiving a notification message reported by a proxy server, the following steps may be further performed: acquiring an IP address of the first user equipment and an IP address of the second user equipment from the notification message; acquiring an ID of the first user equipment and an ID of the second user equipment respectively according to the IP address of the first user equipment and the IP address of the second user equipment; acquiring, according to the ID of the first user equipment and the ID of the second user equipment, congestion information of a cell in which the first user equipment is located, congestion information of a cell in which the second user equipment is located, QoS information of the first user equipment, and QoS information of the second user equipment; and determining, based on the acquired congestion information of the cell in which the first user equipment is located, congestion information of the cell in which the second user equipment is located, QoS information of the first user equipment, and QoS information of the second user equipment, to trigger execution of step 102 of switching a transmission manner of the streaming media resource from a unicast manner to a multicast manner.

After the BM-SC acquires the subscription profile of the user from the SPR, the BM-SC triggers, according to congestion information of a cell in which the user is located and QoS information, a subsequent process to proceed, only when the congestion information and the QoS information meet threshold conditions. If the foregoing information does not meet the threshold conditions, the subsequent process is terminated, and switching from unicast to multicast is not performed. The BM-SC sets the threshold conditions for the congestion information and the QoS information, and the switching from unicast to multicast is performed only when the threshold conditions are met, thereby ensuring transmission of a streaming media resource and improving user experience.

It should be noted that, in this embodiment of the present invention, the congestion information is mainly used for determining, a multicast code rate level of a video, used after the transmission manner is switched to multicast. For example, a video is classified into a high-resolution file, a medium-resolution file, and a low-resolution file; when congestion is heavy, the low-resolution file is transmitted in the multicast manner; when congestion is moderate, the medium-resolution file is transmitted in the multicast manner; when the congestion information indicates mild congestion, the high-resolution file is transmitted in the multicast manner.

In some embodiments of the present invention, after the receiving a notification message reported by a proxy server, the method may further include the following steps:
acquiring the IP address of the first user equipment and the IP address of the second user equipment from the notification message;
acquiring an ID of the first user equipment and an ID of the second user equipment respectively according to the IP address of the first user equipment and the IP address of the second user equipment;
acquiring, according to the ID of the first user equipment, a cell identity (Cell ID for short) of a cell in which the first user equipment is located, and acquiring, according to the ID of the second user equipment, a Cell ID of a cell in which the second user equipment is located;
querying whether the Cell ID of the cell in which the first user equipment is located and the Cell ID of the cell in which the second user equipment is located are in a same SFN area and a same MBMS service area;
if the cell in which the first user equipment is located and the cell in which the second user equipment is located are in the same SFN area and the same MBMS Service area, triggering execution of step 402 of switching a transmission manner of the streaming media resource from a unicast manner to a multicast manner; and
if the cell in which the first user equipment is located and the cell in which the second user equipment is located are in the same SFN area but are not in the same MBMS Service area, creating an MBMS Service area, incorporating the Cell ID of the cell in which the first user equipment is located and the Cell ID of the cell in which the second user equipment is located into the created MBMS Service area, and then triggering execution of step 402 of switching a transmission manner of the streaming media resource from a unicast manner to a multicast manner.

It should be noted that, actions in the foregoing steps may be executed by the BM-SC. The querying, by the BM-SC, whether the Cell ID of the cell in which the first user equipment is located and the Cell ID of the cell in which the second user equipment is located are in a same SFN area and a same MBMS service area may be implemented in the following manner: querying, by the BM-SC, whether the Cell ID of the cell in which the first user equipment is located and the Cell ID of the cell in which the second user equipment is located are in the same SFN area and the same MBMS service area, where a table showing a correspondence between a Cell ID and an SFN area and a correspondence between the Cell ID and an MBMS service area is pre-configured in the BM-SC.

It should be noted that, the acquiring, according to the ID of the first user equipment, a Cell ID of a cell in which the first user equipment is located includes:
sending a Cell ID query message to a packet data network gateway (P-GW, PDN Gateway) or a PCRF according to the ID of the first user equipment, where the Cell ID query message includes the ID of the first user equipment; and
receiving Cell ID feedback information returned by the P-GW or the PCRF, where the Cell ID feedback information includes the Cell ID of the cell in which the first user equipment is located; and
the acquiring, according to the ID of the second user equipment, a Cell ID of a cell in which the second user equipment is located includes:
   sending a Cell ID query message to the P-GW or the PCRF according to the ID of the second user equipment, where the Cell ID query message includes the ID of the second user equipment; and
   receiving Cell ID feedback information returned by the P-GW or the PCRF, where the Cell ID feedback information includes the Cell ID of the cell in which the second user equipment is located.

402: Switch a transmission manner of the streaming media resource from a unicast manner to a multicast manner.

In this embodiment of the present invention, the BM-SC learns, according to the notification message reported by the proxy server, that multiple user equipments access a same streaming media resource, and the BM-SC may switch the transmission manner of the streaming media resource from the unicast manner to the multicast manner. The BM-SC serves as a decision point of an on-demand multimedia broadcast multicast (on-demand MBMS) session, and when multiple user equipments access a same streaming media resource, makes a decision of switching from unicast to multicast; and then enables an MBMS service.

It should be noted that, in this embodiment of the present invention, when the transmission manner of the streaming media resource is switched from the unicast manner to the multicast manner, parameters that need to be set include: a quantity of users that request the same streaming media resource (that is, the same URL). The quantity of the users that request the same streaming media resource is compared with a preset threshold, and if the quantity exceeds the threshold, switching from the unicast manner to the multicast manner is activated. In addition, the parameters that need to be set may further include: an average signal-to-noise ratio of the user equipments that request the same streaming media resource (that is, the same URL). The average signal-to-noise ratio is compared with a preset threshold, and if the average signal-to-noise ratio exceeds the threshold, switching from the unicast manner to the multicast manner is activated.

403. Send a notification response message to the proxy server, so that the proxy server learns that a BM-SC enables an MBMS service.

It should be noted that, in this embodiment of the present invention, after the sending, by the BM-SC, a notification response message to the proxy server, the method may further include: acquiring the streaming media resource according to the download address of the streaming media resource; encoding the streaming media resource, to obtain FDT instance information; generating USD information; and sending the FDT instance information and the USD information to the proxy server. Refer to the description in the foregoing embodiments for a process in which the BM-SC generates the FDT instance information and the USD information.

In this embodiment of the present invention, after receiving a notification message reported by a proxy server, a BM-SC switches a transmission manner of a streaming media resource from a unicast manner to a multicast manner, and then notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable an MBMS service and receive the streaming media resource, thereby implementing switching of streaming media resource transmission from unicast to multicast, and reducing backhaul link resources of a core network and air interface resources of a base station.

To better understand and implement the foregoing solutions according to the embodiments of the present invention, corresponding application scenarios are given below for specific description.

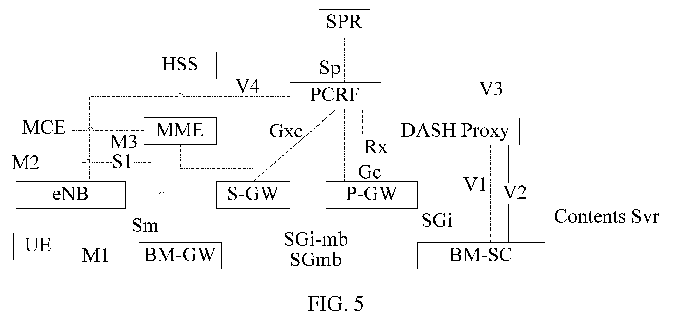

The foregoing embodiments of the present invention separately describe a PCRF, a proxy server, and a BM-SC, the following describes a system architecture of an MBMS system to which the PCRF, the proxy server, and the BM-SC are specifically applied. Referring to FIG. 5, which is a schematic diagram of an application scenario of a PCRF, a proxy server, and a BM-SC according to an embodiment of the present invention.

The proxy server may specifically be a DASH Proxy. The DASH Proxy is connected to the PCRF by using an Rx interface, and the DASH Proxy is connected to the BM-SC by using a P-GW (PDN Gateway, packet data network gateway), an interface between the P-GW and the BM-SC is an SGi interface, and the DASH Proxy is connected to a content server (Contents Svr). FIG. 5 shows that the DASH Proxy is connected to the BM-SC by using a V1 interface and a V2 interface. Based on the description in the foregoing embodiments, there may also be no connection between the DASH Proxy and the BM-SC, that is, there is no V1 interface or V2 interface. The BM-SC is connected to a BM-GW (Broadcast-Multicast-Gateway, broadcast multicast gateway) by using an SGi-mb interface and an SGmb interface, and the BM-SC is connected to the content server (Contents Svr). The PCRF is connected to the P-GW by using a Ge interface, the PCRF is connected to an SPR (Subscription Profile Repository, subscription profile repository) by using an Sp interface, the PCRF is connected to a S-GW (Serving Gateway, serving gateway) by using a Gxc interface, the PCRF is connected to the BM-SC by using a V3 interface, and the PCRF is connected to an eNB (eNodeB, evolved system base station) by using a V4 interface. The S-GW is connected to an MME (Mobility Management Entity, mobility management entity), and the S-GW is connected to the eNB. The MME is connected to an HSS (Home Subscriber Server, home subscriber server), the MME is connected to an MCE (Multi-cell/multicast Coordination Entity, multi-cell/multicast coordination entity) by using an M3 interface, the MME is connected to the BM-GW by using an Sm interface, and the MME is connected to the eNB by using an S1 interface. The BM-GW is connected to the eNB by using an M1 interface, and the MCE is connected to the eNB by using an M2 interface.

It should be noted that, if a connection between two modules in FIG. 5 is indicated by a dashed line, it indicates that the connection is a control-plane connection; if a connection between two modules is indicated by a solid line, it indicates that the connection is a data-plane connection.

Based on the PCRF, the proxy server, and the BM-SC that are shown in FIG. 5, specific functions that need to be implemented by the PCRF, the proxy server, and the BM-SC may be specifically as follows:

The proxy server may specifically perform the following functions:
(1) DASH service event detection: detecting, by using a url (for example, Segment#n url) requested by a user, that multiple UEs access a same video stream event at the same time;
(2) event report: reporting a notification message to the PCRF, where the notification message includes that, it is detected that multiple UEs access the same video stream event at the same time;
(3) in an architecture in which a V1/V2 interface exists, sending an on-demand service request content (On-demand Object) message to the BM-SC, that is,
   in an architecture in which a V1/V2 interface exists, sending a video stream content file to the BM-SC;
(4) instructing the UE to receive multicast content by using an MBMS; and
(5) delivering FDT instance information to the UE and delivering USD information to the UE.

The PCRF may specifically perform the following functions:
(1) receiving a notification message reported by the proxy server, and learning that multiple UEs access a same video stream event at the same time;
(2) as a decision point of an on-demand MBMS session, making a decision of switching from unicast to multicast;
(3) notifying the proxy server of combined group information, and notifying the BM-SC of the combined group information; and
(4) instructing the BM-SC to activate MBMS broadcasting.

The BM-SC may specifically perform the following functions:
(1) in an architecture in which a V1/V2 interface exists, receiving a video stream content file delivered by the proxy server; and
   in an architecture in which a V1/V2 interface does not exist, requesting video content from a Content Server according to MPD and Object Info(Segment#n url)), where the requested video content is object1, object2, ..., and object m;
(2) packaging the video content in a broadcast format;
(3) dynamically creating FDT instance information (FDT Instance info): performing flute encoding on object1 to object m according to a time sequence provided by the MPD, to construct FDT Instance info;
(4) delivering FDT Instance info to the proxy server;
(5) dynamically constructing USD information; and
(6) delivering the USD information to the proxy server or the PCRF.

The UE may specifically perform the following functions:
(1) DASH service request: a requested video stream is Segment#n url;
(2) acquiring FDT instance information from the proxy server;
(3) acquiring USD information from the proxy server;
(4) receiving video stream file content by using an MBMS;
(5) content decoding: acquiring a file delivery object corresponding to segment #n according to FDT instance info, performing flute decoding on the file delivery object, and then transmitting, according to the USD information, content obtained after the flute decoding to a decoder originally corresponding to segment#n, for decoding; the same processing is also performed on content after segment#n, and a user can watch program content by using the MBMS; and
(6) presentation of the video stream content.

It can be known from the foregoing function description of the proxy server, the PCRF, and the BM-SC that, in a case in which multiple users select a same on-demand video content at the same time in a same MBMS network, in this embodiment of the present invention, the multiple users dynamically perform switching to a multicast manner to receive the video stream content, so as to reduce, for an operator, backhaul link (backhaul) resources of a core network and air interface resources of a base station, and reduce, for the operator, transmission costs of transmitting a video stream.

It can be known from the foregoing embodiment that, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

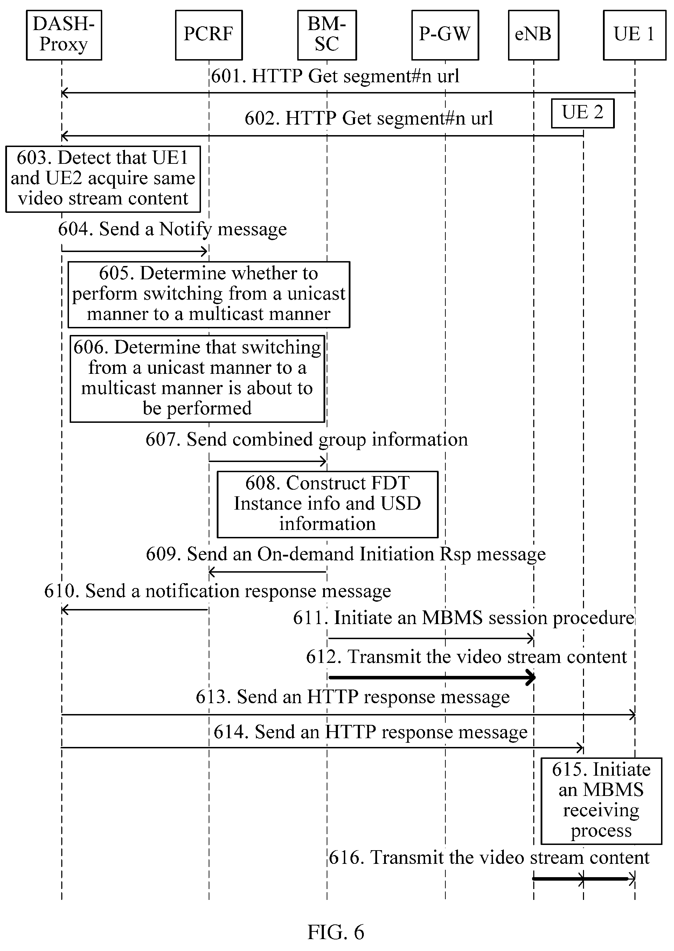

To further describe a data interaction processing procedure between functional entities in this embodiment of the present invention, detailed description is given below by using an embodiment of a DASH service. It is assumed that, UE1 and UE2 are about to watch an on-demand service request (VoD, Video on demand) program of an Internet company over the top (OTT, Over the top) content provider, and the UE1 and the UE2 have acquired MPD of the same program in advance. Description is given below by using an example in which the UE1 and the UE2 are located in a same Cell, or certainly may be located in different Cells, which is provided merely for description herein; in addition, a DASH Proxy has been deployed in an operator, and the DASH Proxy may perceive an HTTP message that is sent by the UE to the OTT content server. Referring to FIG. 6 which is a schematic flowchart of a switch method from a unicast to a multicast, a method for supporting multicast of streaming media according to this embodiment of the present invention may include the following steps:

601. UE1 sends an HTTP Get segment#n url message to a network according to MPD content, where a download address url of video content requested by the UE1 is Object Info(Segment#n url)_UE1.

602. UE2 also sends an HTTP Get segment#n url message to the network according to the MPD content, where a download address url of video content requested by the UE2 is Object Info(Segment#n url)_UE2.

603. A DASH Proxy captures HTTP Get segment#n url messages that are sent by two UEs. When segement#n urls are consistent, the DASH Proxy may determined that the UE1 and the UE2 are about to acquire same video stream content.

The DASH Proxy may obtain, in advance, the MPD or MPD obtained by an interaction between the DASH Proxy and the OTT content server. The DASH Proxy may further query, by using UAProf information (provided by the UE) carried in the HTTP Get message, whether a terminal supports an MBMS broadcast capability; and if the terminal does not support the MBMS broadcast capability, the DASH Proxy does not need to perform subsequent steps.

604. The DASH Proxy sends a notification (Notify) message to a PCRF.

The notification message may include: UElinfo(UE1 IP addr), UE2info(UE2 IP addr), MPD, and Object Info(Segment#n url)).

605. The PCRF may obtain, according to UE1 IP addr and UE2 IP addr, and by using a known mapping relationship between a UE ID and UE IP addr, UE IDs corresponding to IP addr; and obtain subscription profile of a user from an SPR by using the UE IDs as parameters to determine whether to perform switching from a unicast manner to a multicast manner, for example, whether the user supports an MBMS broadcast service, QoS information of the user, and classification information of the user. If the user does not support the MBMS broadcast service, a subsequent process is terminated.

606. If user information of the UE1 and the UE2 indicates that the MBMS service is supported, and it is learned, by using Cell IDs, that the UE1 and the UE2 are located in a same Cell, the PCRF may determine that switching is performed on an object corresponding to Segment#n url from a unicast manner to a multicast manner.

During creation of a default bearer of a UE, the P-GW has reported a Cell ID corresponding to the UE to the PCRF. When the UE moves to another Cell, Cell ID information inside the PCRF may also be updated synchronously. If the UE1 and the UE2 correspond to a same Cell ID, the PCRF may consider that the UE1 and the UE2 are located in a same cell.

The PCRF queries the Cell ID by using the UE IDs, and queries, according to the Cell ID from a BM-SC, whether UE1 CELL ID and UE2 CELL ID are in a same SFN area and a same MBMS service area. If the UE1 and the UE2 are not in the same SFN Area, the subsequent process is terminated. If the UE1 and the UE2 are both in the same SFN area and the same MBMS Service area, the PCRF may determine that switching is performed on an object corresponding to Segment#n url from a unicast manner to a broadcast manner; or if the UE1 and the UE2 are in the same SFN area but are not in the same MBMS Service area, the PCRF may instruct the BM-SC to create an MBMS Service area, and perform switching on the object corresponding to Segment#n url from a unicast manner to a broadcast manner.

Alternatively, the PCRF may pre-configure a table showing a correspondence between a Cell ID and an SFN area and a correspondence between the Cell ID and an MBMS service area. The foregoing determining process can be implemented without an interaction with the BM-SC. That is, the PCRF queries whether UE1 Cell ID and UE2 Cell ID are in the same SFN area and the same MBMS service area. If the UE1 and the UE2 are not in the same SFN Area, the subsequent process is terminated. If the UE1 and the UE2 are both in the same SFN area and the same MBMS Service area, the PCRF may determine that switching is performed on an object corresponding to Segment#n url from a unicast manner to a broadcast manner; or if the UE1 and the UE2 are in the same SFN area but are not in the same MBMS Service area, the PCRF instructs the BM-SC to create an MBMS Service area, and perform switching on the object corresponding to Segment#n url from a unicast manner to a broadcast manner.

607. The PCRF sends combined group information to a BM-SC, where the combined group information may be specifically on-demand service request initiation (On-demand Initiation) message, and the message may include the following information: MPD, Segment#n url, UE1 info (UE1 ID, UE1 IP addr), and UE2 info(UE2 ID, UE2 IP addr).

608. The BM-SC acquires object1 from a content server according to Segment#n url and the MPD, and a download address url. The BM-SC may further successively acquire multiple objects after segment#n according to MPD information, till the end of MPD content (it is assumed that object2, ..., object m are acquired). The BM-SC performs flute encoding on the object1 to object m according to a time sequence provided by the MPD, to construct FDT Instance info. The BM-SC further records that the UE1 and the UE2 may acquire, by using a security key of an MBMS, content of an MBMS broadcast channel. The BM-SC further constructs USD information.

609. The BM-SC sends an on-demand service request initiation response (On-demand Initiation Rsp) message to the PCRF, where the message includes USD information and FDT instance info.

610. The PCRF sends a notification response (Notify response) message to the DASH Proxy, where the message includes FDT instance info and the UED information.

611. The BM-SC initiates an MBMS session procedure according to the 3GPP TS23.246 protocol standard.

612. The BM-SC transmits video stream content to an eNB according to the 3GPP TS23.246 protocol standard.

613. The DASH Proxy sends an HTTP response message to the UE1, where the message includes an indication that segment#n will be transmitted by using the MBMS, and further includes the USD and FDT instance info.

614. The DASH Proxy sends an HTTP response message to the UE2, where the message includes an indication that segment#n will be transmitted by using the MBMS, and further includes the USD and FDT instance info.

615. The UE1 and the UE2 initiate an MBMS receiving process according to the HTTP response message, to prepare to receive content.

616. The eNB transmits video stream content; the UE1 and the UE2 acquire a file delivery object corresponding to segment #n according to FDT instance info, perform flute decoding on the file delivery object, and then transmit, according to the USD information, content obtained after the FLUTE decoding to a video decoder corresponding to segment#n, for decoding; the UE1 and the UE2 perform the same processing on content after segment#n, and a user can watch video stream program content by using the MBMS.

After receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

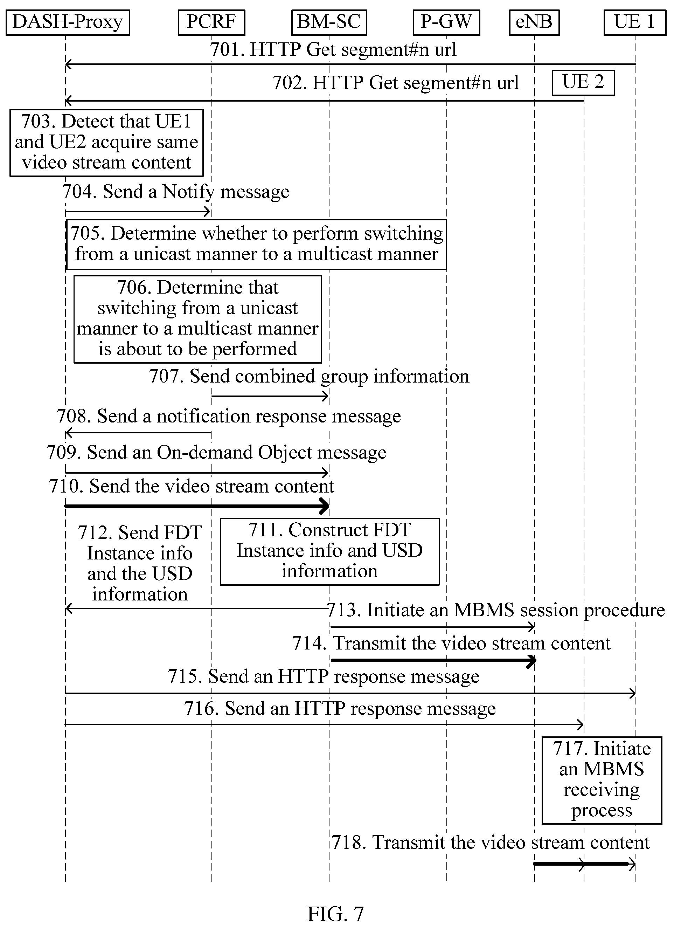

To further describe a data interaction processing procedure between functional entities in this embodiment of the present invention, detailed description is given below by using another embodiment of a DASH service. It is assumed that, UE1 and UE2 are about to watch an on-demand service request (VoD, Video on demand) program of an Internet company over the top (OTT, Over the top) content provider, and the UE1 and the UE2 have acquired MPD of the same program in advance. Description is given below by using an example in which the UE1 and the UE2 are located in a same Cell, or certainly may be located in different Cells, which is provided merely for description herein; in addition, a DASH Proxy has been deployed in an operator, and the DASH Proxy may perceive an HTTP message that is sent by the UE to the OTT content server. Referring to FIG. 7 which is a schematic flowchart of a switch method from a unicast to a multicast, a method for supporting multicast of streaming media according to an embodiment of the present invention may include the following steps:

701. UE1 sends an HTTP Get segment#n url message to a network according to MPD content, where a download address url of video content requested by the UE1 is Object Info(Segment#n url)_UE1.

702. UE2 also sends an HTTP Get segment#n url message to the network according to the MPD content, where a download address url of video content requested by the UE2 is Object Info(Segment#n url)_UE2.

703. A DASH Proxy captures HTTP Get segment#n url messages that are sent by two UEs. When segement#n urls are consistent, the DASH Proxy may determined that the UE1 and the UE2 are about to acquire same video stream content.

The DASH Proxy may obtain, in advance, the MPD or MPD obtained by an interaction between the DASH Proxy and the OTT content server. The DASH Proxy may further query, by using UAProf information (provided by the UE) carried in the HTTP Get message, whether a terminal supports an MBMS broadcast capability; and if the terminal does not support the MBMS broadcast capability, the DASH Proxy does not need to perform subsequent steps.

704. The DASH Proxy sends a notification (Notify) message to a PCRF.

The notification message may include: UElinfo(UE1 IP addr), UE2info(UE2 IP addr), MPD, and Object Info(Segment#n url)).

705. The PCRF may obtain, according to UE1 IP addr and UE2 IP addr, and by using a known mapping relationship between a UE ID and UE IP addr, UE IDs corresponding to IP addr; and obtain subscription profile of a user from an SPR by using the UE IDs as parameters to determine whether to perform switching from a unicast manner to a multicast manner, for example, whether the user supports an MBMS broadcast service, QoS information of the user, and classification information of the user. If the user does not support the MBMS broadcast service, a subsequent process is terminated.

706. If user information of the UE1 and the UE2 indicates that the MBMS service is supported, and it is learned that the UE1 and the UE2 are located in a same Cell by using Cell IDs, the PCRF may determine that switching is performed on an object corresponding to Segment#n url from a unicast manner to a multicast manner.

During creation of a default bearer of a UE, the P-GW has reported a Cell ID corresponding to the UE to the PCRF. When the UE moves to another Cell, Cell ID information inside the PCRF may also be updated synchronously. If the UE1 and the UE2 correspond to a same Cell ID, the PCRF may consider that the UE1 and the UE2 are located in a same cell.

The PCRF queries the Cell ID by using the UE IDs, and queries, according to the Cell ID from a BM-SC, whether UE1 CELL ID and UE2 CELL ID are in a same SFN area and a same MBMS service area. If the UE1 and the UE2 are not in the same SFN Area, the subsequent process is terminated. If the UE1 and the UE2 are both in the same SFN area and the same MBMS Service area, the PCRF may determine that switching is performed on an object corresponding to Segment#n url from a unicast manner to a broadcast manner; or if the UE1 and the UE2 are in the same SFN area but are not in the same MBMS Service area, the PCRF may instruct the BM-SC to create an MBMS Service area, and perform switching on the object corresponding to Segment#n url from a unicast manner to a broadcast manner.

Alternatively, the PCRF may pre-configure a table showing a correspondence between a Cell ID and an SFN area and a correspondence between the Cell ID and an MBMS service area. The foregoing determining process can be implemented without an interaction with the BM-SC. That is, the PCRF queries whether UE1 Cell ID and UE2 Cell ID are in the same SFN area and the same MBMS service area. If the UE1 and the UE2 are not in the same SFN Area, the subsequent process is terminated. If the UE1 and the UE2 are both in the same SFN area and the same MBMS Service area, the PCRF may determine that switching is performed on an object corresponding to Segment#n url from a unicast manner to a broadcast manner; or if the UE1 and the UE2 are in the same SFN area but are not in the same MBMS Service area, the PCRF instructs the BM-SC to create an MBMS Service area, and perform switching on the object corresponding to Segment#n url from a unicast manner to a broadcast manner.

707. The PCRF sends combined group information to a BM-SC, where the combined group information may be specifically on-demand service request initiation (On-demand Initiation) message, and the message may include the following information: MPD, Segment#n url, UE1 info (UE1 ID, UE1 IP addr), and UE2 info(UE2 ID, UE2 IP addr).

708. The PCRF sends a notification response (Notify response) message to the DASH Proxy, to instruct the DASH Proxy to perform switching on the UE1 and the UE2 to a multicast manner.

709. The DASH Proxy sends an on-demand service request video stream content (On-demand Object) message to the BM-SC, where the message includes the MPD and Segment#n url.

710. The DASH Proxy acquires video stream content object corresponding to segment#n url from an OTT content server; or if the DASH Proxy stores the object in a local storage, the DASH Proxy may directly send the object to the BM-SC.

711. The BM-SC receives the object, constructs FDT Instance info according to the MPD and Segment#url information; and the BM-SC further constructs USD information.

712. The BM-SC sends FDT Instance info and the USD information to the DASH Proxy.

713. The BM-SC initiates an MBMS session procedure according to the 3GPP TS23.246 protocol standard.

714. The BM-SC transmits video stream content to an eNB according to the 3GPP TS23.246 protocol standard.

715. The DASH Proxy sends an HTTP response message to the UE1, where the message includes an indication that segment#n will be transmitted by using the MBMS, and further includes the USD and FDT instance info.

716. The DASH Proxy sends an HTTP response message to the UE2, where the message includes an indication that segment#n will be transmitted by using the MBMS, and further includes the USD and FDT instance info.

717. The UE1 and the UE2 initiate an MBMS receiving process according to the HTTP response message, to prepare to receive content.

718. The eNB transmits video stream content; the UE1 and the UE2 acquire a file delivery object corresponding to segment #n according to FDT instance info, perform flute decoding on the file delivery object, and then transmit, according to the USD information, content obtained after the FLUTE decoding to a video decoder corresponding to segment#n, for decoding; the UE1 and the UE2 perform the same processing on content after segment#n, and a user can watch video stream program content by using the MBMS.

It can be known from the foregoing embodiment that, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

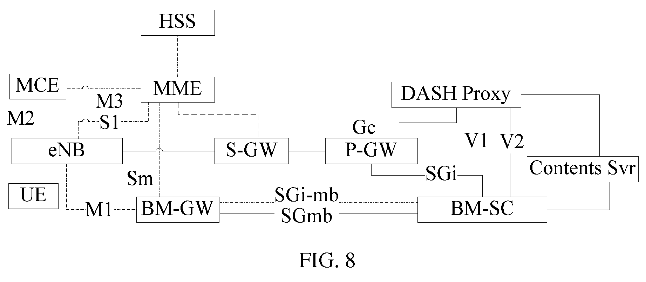

The foregoing embodiments of the present invention separately describe a PCRF, a proxy server, and a BM-SC, the following describes a system architecture of an MBMS system to which the PCRF, the proxy server, and the BM-SC are specifically applied. Referring to FIG. 8, FIG. 8 is a schematic diagram of another application scenario of a proxy server and a BM-SC according to an embodiment of the present invention.

The proxy server may specifically be a DASH Proxy. The DASH Proxy is connected to the BM-SC by using a P-GW (PDN Gateway, packet data network gateway), an interface between the P-GW and the BM-SC is an SGi interface, and the DASH Proxy is connected to a content server (Contents Svr). FIG. 8 shows that the DASH Proxy is connected to the BM-SC by using a V1 interface and a V2 interface. Based on the description in the foregoing embodiments, there may also be no connection between the DASH Proxy and the BM-SC, that is, there is no V1 interface or V2 interface. The BM-SC is connected to a BM-GW (Broadcast-Multicast-Gateway, broadcast multicast gateway) by using an SGi-mb interface and an SGmb interface, and the BM-SC is connected to the content server (Contents Svr). The S-GW is connected to an MME (Mobility Management Entity, mobility management entity), and the S-GW is connected to an eNB. The MME is connected to an HSS (Home Subscriber Server, home subscriber server), the MME is connected to an MCE (Multi-cell/multicast Coordination Entity, multi-cell/multicast coordination entity) by using an M3 interface, the MME is connected to the BM-GW by using an Sm interface, and the MME is connected to the eNB by using an S1 interface. The BM-GW is connected to the eNB by using an M1 interface, and the MCE is connected to the eNB by using an M2 interface.

It should be noted that, if a connection between two modules in FIG. 8 is indicated by a dashed line, it indicates that the connection is a control-plane connection; if a connection between two modules is indicated by a solid line, it indicates that the connection is a data-plane connection.

Based on the proxy server and the BM-SC that are shown in FIG. 8, specific functions that need to be implemented by the proxy server and the BM-SC may be specifically as follows:

The proxy server may specifically perform the following functions:
(1) DASH service event detection: detecting, by using a url (for example, Segment#n url) requested by a user, that multiple UEs access a same video stream event at the same time;
(2) event report: reporting a notification message to the BM-SC, where the notification message includes that, it is detected that multiple UEs access the same video stream event at the same time;
(3) in an architecture in which a V1/V2 interface exists, sending an on-demand service request content (On-demand Object) message to the BM-SC, that is,
   in an architecture in which a V1/V2 interface exists, sending a video stream content file to the BM-SC;
(4) instructing the UE to receive multicast content by using an MBMS; and
(5) delivering FDT instance information to the UE and delivering USD information to the UE.

The BM-SC may specifically perform the following functions:
(1) receiving a notification message reported by the proxy server, and learning that multiple UEs access a same video stream event at the same time;
(2) querying a Cell ID from the P-GW, or query a Cell ID from a PCRF if the PCRF is connected in the system; and
   as a decision point of an on-demand MBMS session, making a decision of switching from unicast to multicast;
(3) notifying the proxy server of combined group information;
(4) activating MBMS broadcasting;
(5) in an architecture in which a V1/V2 interface exists, receiving a video stream content file delivered by the proxy server; and
   in an architecture in which a V1/V2 interface does not exist, requesting video content from a Content Server according to MPD and Object Info(Segment#n url), where the requested video content is object1, object2, ..., and object m;
(6) packaging the video content in a broadcast format;
(7) dynamically creating FDT instance information (FDT Instance info): performing flute encoding on object1 to object m according to a time sequence provided by the MPD, to construct FDT Instance info;
(8) delivering FDT Instance info to the proxy server;
(9) dynamically constructing USD information; and
(10) delivering the USD information to the proxy server or the PCRF.

The UE may specifically perform the following functions:
(1) DASH service request: a requested video stream is Segment#n url;
(2) acquiring FDT instance information from the proxy server;
(3) acquiring USD information from the proxy server;
(4) receiving video stream file content by using an MBMS;
(5) content decoding: acquiring a file delivery object corresponding to segment #n according to FDT instance info, performing flute decoding on the file delivery object, and then transmitting, according to the USD information, content obtained after the flute decoding to a decoder originally corresponding to segment#n, for decoding; the same processing is also performed on content after segment#n, and a user can watch program content by using the MBMS; and
(6) presentation of the video stream content.

It can be known from the foregoing function description of the proxy server, the PCRF, and the BM-SC that, in a case in which multiple users select a same on-demand video content at the same time in a same MBMS network, in this embodiment of the present invention, the multiple users dynamically perform switching to a multicast manner to receive the video stream content, so as to reduce, for an operator, backhaul link (backhaul) resources of a core network and air interface resources of a base station, and reduce, for the operator, transmission costs of transmitting a video stream.

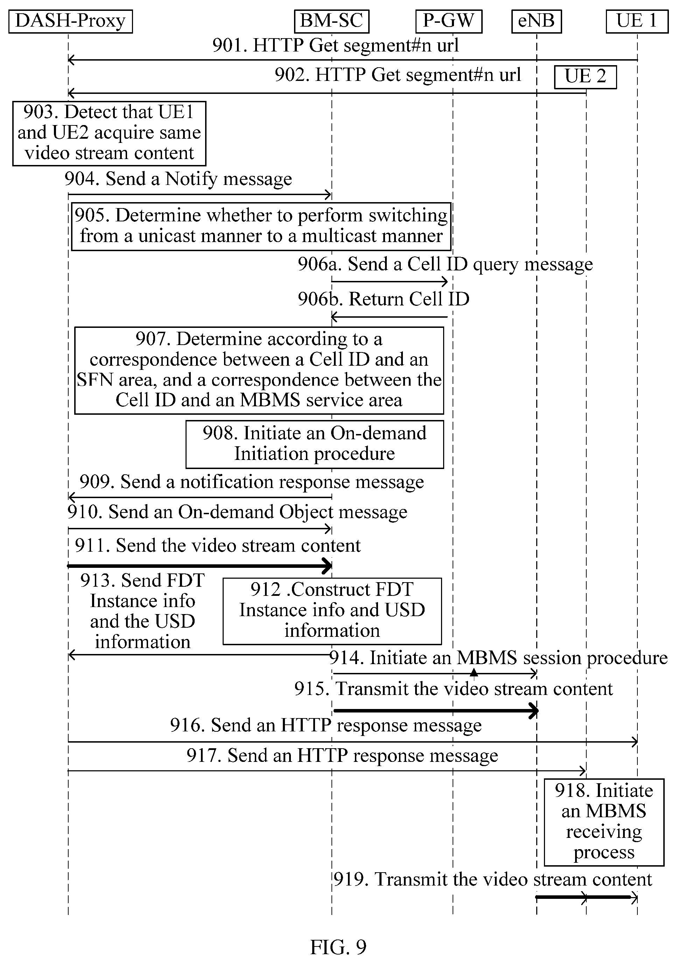

To further describe a data interaction processing procedure between functional entities in this embodiment of the present invention, detailed description is given below by using an embodiment of a DASH service. It is assumed that, UE1 and UE2 are about to watch an on-demand service request (VoD, Video on demand) program of an Internet company over the top (OTT, Over the top) content provider, and the UE1 and the UE2 have acquired MPD of the same program in advance. Description is given below by using an example in which the UE1 and the UE2 are located in a same Cell, or certainly may be located in different Cells, which is provided merely for description herein; in addition, a DASH Proxy has been deployed in an operator, and the DASH Proxy may perceive an HTTP message that is sent by the UE to the OTT content server. Referring to FIG. 9 which is a schematic flowchart of a switch method from a unicast to a multicast, a method for supporting multicast of streaming media according to an embodiment of the present invention may include the following steps:

901. UE1 sends an HTTP Get segment#n url message to a network according to MPD content, where a download address url of video content requested by the UE1 is Object Info(Segment#n url)_UE1.

902. UE2 also sends an HTTP Get segment#n url message to the network according to the MPD content, where a download address url of video content requested by the UE2 is Object Info(Segment#n url)_UE2.

903. A DASH Proxy captures HTTP Get segment#n url messages that are sent by two UEs. When segement#n urls are consistent, the DASH Proxy may determined that the UE1 and the UE2 are about to acquire same video stream content.

The DASH Proxy may obtain, in advance, the MPD or MPD obtained by an interaction between the DASH Proxy and the OTT content server. The DASH Proxy may further query, by using UAProf information (provided by the UE) carried in the HTTP Get message, whether a terminal supports an MBMS broadcast capability; and if the terminal does not support the MBMS broadcast capability, the DASH Proxy does not need to perform subsequent steps.

904. The DASH Proxy sends a notification (Notify) message to a BM-SC.

The notification message may include: UElinfo(UE1 IP addr), UE2info(UE2 IP addr), MPD, and Object Info(Segment#n url)).

905. The BM-SC acquires a subscription profile (for example, whether the user supports an MBMS broadcast service, QoS information of the user, and classification information of the user) of a user, and determines whether to perform switching from a unicast manner to the multicast manner. If the user does not support the MBMS broadcast service, a subsequent process is terminated.

906a. The BM-SC sends a Cell ID query message to a P-GW, where the query message includes UE1 info(UE1 IP addr) and UE2 info(UE2 IP addr).

906b. The P-GW returns a Cell ID to the BM-SC.

Certainly, steps 906a and 906b may also be replaced with the following steps:
sending, by the BM-SC, a Cell ID query message to a PCRF, where the query message includes UE1 info(UE1 IP addr) and UE2 info(UE2 IP addr); and
returning, by the PCRF, a Cell ID to the BM-SC.

907. The BM-SC performs determining according to a correspondence between a Cell ID and an SFN area and a correspondence between the Cell ID and an MBMS service area, and if the UE1 and the UE2 are not located in the same SFN area, terminates the subsequent process; if the UE1 and the UE2 are both in the same SFN area and the same MBMS Service area, the BM-SC may determine that switching is performed on an object corresponding to Segment#n url from a unicast manner to a broadcast manner; or if the UE1 and the UE2 are in the same SFN area but are not in the same MBMS Service area, the BM-SC may create an MBMS Service area, and perform switching on the object corresponding to Segment#n url from a unicast manner to a broadcast manner.

908. The BM-SC initiates an On-demand Initiation process, and the UE1 and the UE2 may acquire, by using a security key of an MBMS, content of an MBMS broadcast channel.

909. The BM-SC sends a notification response (Notify response) message to the DASH Proxy, to instruct the DASH Proxy to perform switching on the UE1 and the UE2 to a multicast manner.

910. The DASH Proxy sends an on-demand service request video stream content (On-demand Object) message to the BM-SC, where the message includes the MPD and Segment#n url.

911. The DASH Proxy acquires video stream content object corresponding to segment#n url from an OTT content server; or if the DASH Proxy stores the object in a local storage, the DASH Proxy may directly send the object to the BM-SC.

912. The BM-SC receives the object, constructs FDT Instance info according to the MPD and Segment#url information; and the BM-SC further constructs USD information.

913. The BM-SC sends FDT Instance info and the USD information to the DASH Proxy.

914. The BM-SC initiates an MBMS session procedure according to the 3GPP TS23.246 protocol standard.

915. The BM-SC transmits video stream content to an eNB according to the 3GPP TS23.246 protocol standard.

916. The DASH Proxy sends an HTTP response message to the UE1, where the message includes an indication that segment#n will be transmitted by using the MBMS, and further includes the USD and FDT instance info.

917. The DASH Proxy sends an HTTP response message to the UE2, where the message includes an indication that segment#n will be transmitted by using the MBMS, and further includes the USD and FDT instance info.

918. The UE1 and the UE2 initiate an MBMS receiving process according to the HTTP response message, to prepare to receive content.

919. The eNB transmits video stream content; the UE1 and the UE2 acquire a file delivery object corresponding to segment #n according to FDT instance info, perform flute decoding on the file delivery object, and then transmit, according to the USD information, content obtained after the FLUTE decoding to a video decoder corresponding to segment#n, for decoding; the UE1 and the UE2 perform the same processing on content after segment#n, and a user can watch video stream program content by using the MBMS.

It should be noted that, for the methods according to the foregoing embodiments, to make the description simple, each method is described as a combination of a series of actions, but a person skilled in the art should know that the present invention is not limited by the described action sequence, because in accordance with the present invention, some steps can be performed in other sequences or synchronously. Besides, a person skilled in the art should also know that, all the embodiments described in the specification are exemplary embodiments, and the related actions and modules are not mandatory to the present invention.

To better implement the foregoing solutions according to the embodiments of the present invention, the following further provides a related apparatus for implementing the foregoing solutions.

Referring to FIG. 10-a, this embodiment of the present invention provides a policy and charging rules function PCRF 1000, which may include a receiving module 1001, a multicast switch module 1002, and a sending module 1003, where
the receiving module 1001 is configured to receive a notification message reported by a proxy server, where the notification message includes that first user equipment and second user equipment separately access a same streaming media resource;
the multicast switch module 1002 is configured to switch a transmission manner of the streaming media resource from a unicast manner to a multicast manner; and
the sending module 1003 is configured to send combined group information to a broadcast multicast service center BM-SC, where the combined group information includes an Internet Protocol IP address of the first user equipment, an IP address of the second user equipment, and a download address of the streaming media resource; where
the sending module 1003 is further configured to send a notification response message to the proxy server, so that the proxy server learns that the BM-SC enables a multimedia broadcast multicast service MBMS service.

In some embodiments of the present invention, the receiving module 1001 is further configured to receive file delivery table FDT instance information and user service description USD information that are sent by the BM-SC, where the FDT instance information is a result of encoding performed on the streaming media resource after the BM-SC acquires the streaming media resource according to the combined group information; and
the sending module 1003 is further configured to send the FDT instance information and the USD information to the proxy server.

Referring to FIG. 10-b, in some embodiments of the present invention, the PCRF 1000 may further include an acquiring module 1004 and a determining module 1005, where
the acquiring module 1004 is configured to acquire the IP address of the first user equipment and the IP address of the second user equipment from the notification message;
the acquiring module 1004 is further configured to acquire an identity ID of the first user equipment and an ID of the second user equipment respectively according to the IP address of the first user equipment and the IP address of the second user equipment;
the determining module 1005 is configured to determine, according to the ID of the first user equipment and the ID of the second user equipment, whether the first user equipment and the second user equipment support the multimedia broadcast multicast service MBMS service; and
the determining module 1005 is further configured to: if the first user equipment and the second user equipment both support the MBMS service, trigger execution of the multicast switch module 1002.

In some other embodiments of the present invention, the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
the acquiring module is further configured to determine, based on the acquired congestion information of the cell in which the first user equipment is located, congestion information of the cell in which the second user equipment is located, quality of service QoS information of the first user equipment, and QoS information of the second user equipment, to trigger execution of the multicast switch module 1002.

In some other embodiments of the present invention, the PCRF 1000 may further include a notification module 1006, where
the acquiring module 1004 is configured to acquire the IP address of the first user equipment and the IP address of the second user equipment from the notification message;
the acquiring module 1004 is further configured to acquire the identity ID of the first user equipment and the ID of the second user equipment respectively according to the IP address of the first user equipment and the IP address of the second user equipment;
the acquiring module 1004 is further configured to acquire, according to the ID of the first user equipment, a cell identity Cell ID of the cell in which the first user equipment is located, and acquire, according to the ID of the second user equipment, a cell identity Cell ID of the cell in which the second user equipment is located;
the determining module 1005 is configured to query whether the Cell ID of the cell in which the first user equipment is located and the Cell ID of the cell in which the second user equipment is located are in a same single frequency network area SFN area and a same multimedia broadcast multicast service area MBMS service area;
the determining module 1005 is further configured to trigger execution of the multicast switch module if the cell in which the first user equipment is located and the cell in which the second user equipment is located are in the same SFN area and the same MBMS Service area;
the notification module 1006 is configured to instruct the BM-SC to create an MBMS Service area if the cell in which the first user equipment is located and the cell in which the second user equipment is located are in the same SFN area but are not in the same MBMS Service area; and
the notification module 1006 is further configured to trigger execution of the multicast switch module after instructing the BM-SC to create the MBMS Service area.

It can be known from the foregoing embodiment that, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

Referring to FIG. 11-a, this embodiment of the present invention provides a proxy server 1100, which may include: a detection module 1101, a sending module 1102, and an acquiring module 1103, where
the detection module 1101 is configured to detect download addresses of streaming media resources that are requested separately by first user equipment and second user equipment, and acquire that the first user equipment and the second user equipment separately access a same streaming media resource;
the sending module 1102 is configured to report a notification message to a policy and charging rules function PCRF or a broadcast multicast service center BM-SC, where the notification message includes that the first user equipment and the second user equipment separately access the same streaming media resource; and
the acquiring module 1103 configured to acquire file delivery table FDT instance information and user service description USD information; where
the sending module 1102 is further configured to separately send multimedia broadcast multicast service MBMS service indication information to the first user equipment and the second user equipment, where the MBMS service indication information includes the FDT instance information and the USD information.

In some embodiments of the present invention, the acquiring module 1103 is specifically configured to receive the FDT instance information and the USD information that are sent by the PCRF.

In some other embodiments of the present invention, the acquiring module 1103 is further configured to acquire a media presentation description file MPD from a content server, where the notification message further includes the MPD.

Referring to FIG. 11-b, in some embodiments of the present invention, the proxy server 1100 may further include: a query module 1104, where
the query module 1104 is configured to query, by using user agency profile UAProf information, whether the first user equipment and the second user equipment support a multimedia broadcast multicast service MBMS service; and
the query module 1104 is further configured to: if the first user equipment and the second user equipment both support the MBMS service, trigger execution of the sending module 1102.

In some embodiments of the present invention, the acquiring module 1103 includes an address sending submodule 11031, a resource acquiring submodule 11032, a resource sending submodule 11033, and a receiving submodule 11034, where
the address sending submodule 11031 is configured to send a download address corresponding to the streaming media resource to the broadcast multicast service center BM-SC;
the resource acquiring submodule 11032 is configured to download the streaming media resource corresponding to the download address from a content server; or extract the streaming media resource corresponding to the download address from a local storage;
the resource sending submodule 11033 is configured to send the streaming media resource to the BM-SC, so that the BM-SC encodes the streaming media resource to generate the FDT instance information; and
the receiving submodule 11034 is configured to receive the FDT instance information and the USD information that are sent by the BM-SC.

Referring to FIG. 12, this embodiment of the present invention provides a broadcast multicast service center BM-SC 1200, which may include a receiving module 1201, an acquiring, module 1202, an encoding module 1203, a generating module 1204, and a sending module 1205, where
the receiving module 1201 is configured to receive combined group information reported by a policy and charging rules function PCRF, where the combined group information includes an Internet Protocol IP address of first user equipment, an IP address of second user equipment, and a download address of a streaming media resource, where the first user equipment and the second user equipment separately access a same streaming media resource;
the acquiring module 1202 is configured to acquire the streaming media resource according to a download address of the streaming media resource;
the encoding module 1203 is configured to encode the streaming media resource, to obtain file delivery table FDT instance information;
the generating module 1204 is configured to generate user service description USD information; and
the sending module 1205 is configured to send the FDT instance information and the USD information to the PCRF or a proxy server.

In some embodiments of the present invention, the acquiring module 1202 is specifically configured to receive the streaming media resource corresponding to the download address and sent by the proxy server; or the acquiring module 1202 is specifically configured to request, according to the download address, the streaming media resource corresponding to the download address from a content server, and receive the streaming media resource corresponding to the download address and returned by the content server.

In some other embodiments of the present invention, the combined group information further includes: a media presentation description file MPD; and the acquiring module 1203 is further configured to acquire, according to the MPD, the streaming media resource corresponding to another download address than the foregoing download address in the MPD.

In some embodiments of the present invention, the sending module 1205 is further configured to simultaneously send the streaming media resource to the first user equipment and the second user equipment according to a multimedia broadcast multicast service MBMS service.

In some other embodiments of the present invention, the sending module 1205 is specifically configured to send MBMS session information to a base station of a cell to which the first user equipment belongs and a base station of a cell to which the second user equipment belongs; and send the streaming media resource to the base station of the cell to which the first user equipment belongs and the base station of the cell to which the second user equipment belongs, so that the base station of the cell to which the first user equipment belongs sends the streaming media resource to the first user equipment and the base station of the cell to which the second user equipment belongs sends the streaming media resource to the second user equipment.

It can be known from the foregoing embodiment that, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

Referring to FIG. 13-a, this embodiment of the present invention provides another broadcast multicast service center BM-SC 1300, which may include a receiving module 1301, a multicast switch module 1302, and a sending module 1303, where
the receiving module 1301 is configured to receive a notification message reported by a proxy server, where the notification message includes that first user equipment and second user equipment separately access a same streaming media resource;
the multicast switch module 1302 is configured to switch a transmission manner of the streaming media resource from a unicast manner to a multicast manner; and
the sending module 1303 is configured to send a notification response message to the proxy server, so that the proxy server learns that the BM-SC enables a multimedia broadcast multicast service MBMS service.

Referring to FIG. 13-b, in some embodiments of the present invention, the BM-SC 1300 may further include an acquiring module 1304, configured to acquire the streaming media resource according to the download address of the streaming media resource;
an encoding module 1305, configured to encode the streaming media resource, to obtain file delivery table FDT instance information; and
a generating module 1306, configured to generate user service description USD information; where
the sending module 1303 is further configured to send the FDT instance information and the USD information to the proxy server.

Referring to FIG. 13-b, the BM-SC 1300 further includes: the acquiring module 1304 and a determining module 1307, where
the acquiring module 1304 is configured to acquire the IP address of the first user equipment and the IP address of the second user equipment from the notification message;
the acquiring module 1304 is further configured to acquire the identity ID of the first user equipment and the ID of the second user equipment respectively according to the IP address of the first user equipment and the IP address of the second user equipment;
the determining module 1307 is configured to determine, according to the ID of the first user equipment and the ID of the second user equipment, whether the first user equipment and the second user equipment support the multimedia broadcast multicast service MBMS service; and
the determining module 1307 is further configured to trigger execution of the multicast switch module if the first user equipment and the second user equipment both support the MBMS service.

In some other embodiments of the present invention, the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
the acquiring module is further configured to determine, based on the acquired congestion information of the cell in which the first user equipment is located, congestion information of the cell in which the second user equipment is located, quality of service QoS information of the first user equipment, and QoS information of the second user equipment, to trigger execution of the multicast switch module.

Referring to FIG. 13-b, the BM-SC 1300 further includes: a query module 1308 and a creating module 1309, where
the acquiring module 1304 is configured to acquire the IP address of the first user equipment and the IP address of the second user equipment from the notification message;
the acquiring module 1304 is further configured to acquire the identity ID of the first user equipment and the ID of the second user equipment respectively according to the IP address of the first user equipment and the IP address of the second user equipment;
the acquiring module 1304 is further configured to acquire, according to the ID of the first user equipment, a cell identity Cell ID of the cell in which the first user equipment is located, and acquire, according to the ID of the second user equipment, a cell identity Cell ID of the cell in which the second user equipment is located;
the query module 1308 is configured to query whether the Cell ID of the cell in which the first user equipment is located and the Cell ID of the cell in which the second user equipment is located are in a same single frequency network area SFN area and a same multimedia broadcast multicast service area MBMS service area;
the query module 1308 is further configured to trigger execution of the multicast switch module if the cell in which the first user equipment is located and the cell in which the second user equipment is located are in the same SFN area and the same MBMS Service area; and
the creating module 1309 is configured to: if the cell in which the first user equipment is located and the cell in which the second user equipment is located are in the same SFN area but are not in the same MBMS Service area, create an MBMS Service area, incorporate the Cell ID of the cell in which the first user equipment is located and the Cell ID of the cell in which the second user equipment is located into the created MBMS Service area, and then trigger execution of the multicast switch module.

In some other embodiments of the present invention, the acquiring module is specifically configured to send a Cell ID query message to a packet data network gateway P-GW or a policy and charging rules function PCRF according to the ID of the first user equipment, where the Cell ID query message includes the ID of the first user equipment; receive Cell ID feedback information returned by the P-GW or the PCRF, where the Cell ID feedback information includes the Cell ID of the cell in which the first user equipment is located; send a Cell ID query message to the packet data network gateway P-GW or the policy and charging rules function PCRF according to the ID of the second user equipment, where the Cell ID query message includes the ID of the second user equipment; and receive Cell ID feedback information returned by the P-GW or the PCRF, where the Cell ID feedback information includes the Cell ID of the cell in which the second user equipment is located.

Referring to FIG. 14-a, this embodiment of the present invention provides an MBMS system 1400, which may include: a PCRF 1000, a proxy server 1100, a BM-SC 1200, first user equipment 1401, and second user equipment 1402, where
the PCRF 700 is the PCRF described in FIG. 10-a and FIG. 10-b, the proxy server 1100 is the proxy server described in FIG. 11-a and FIG. 11-b, and the BM-SC 1200 is the BM-SC described in FIG. 12, where
the PCRF 1000 is separately connected to the BM-SC 1200 and the proxy server 1100 in a communication manner.

In some embodiments of the present invention, the PCRF 1000 is connected to the proxy server 1100 by using an Rx interface, and the PCRF 1000 is connected to the BM-SC 1200 by using a V3 interface.

In some embodiments of the present invention, the proxy server 1100 is connected to the BM-SC 1200 by using a V1 interface and a V2 interface.

Referring to FIG. 14-b, this embodiment of the present invention provides an MBMS system 1400, which may include: a proxy server 1100, a BM-SC 1300, first user equipment 1401, and second user equipment 1402, where
the proxy server 1100 is the proxy server described in FIG. 11-a and FIG. 11-b, and the BM-SC 1300 is the BM-SC described in FIG. 13-a and FIG. 13-b, where
the proxy server 1100 is connected to the BM-SC 1300 in a communicable manner.

In some embodiments of the present invention, the proxy server 1100 is connected to the BM-SC 1300 by using a V1 interface and a V2 interface.

It should be noted that, reference may be made to the illustration in the method embodiments of the present invention for specific content such as an information interaction and an execution process between the units/modules of the foregoing apparatus as the content is based on the same concept as the method embodiments of the present invention, and the details are no longer described herein.

To sum up, it can be known from FIG. 10 to FIG. 14 that, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

This embodiment of the present invention further provides a computer storage medium, where the computer storage medium stores a program, and the program executes some or all deployments recorded in the foregoing method embodiments.

The following introduces another PCRF provided by an embodiment of the present invention. Referring to FIG. 15, the PCRF 1500 includes:
an input apparatus 1501, an output apparatus 1502, a processor 1503, and a memory 1504 (where there may be one or more processors 1503 in the PCRF 1500, and one processor is used as an example in FIG. 15). In some embodiments of the present invention, the input apparatus 1501, the output apparatus 1502, the processor 1503, and the memory 1504 may be connected by using a bus or in another manner, and FIG. 15 uses an example in which they are connected by using a bus.

The processor 1503 is configured to perform the following steps: receiving a notification message reported by a proxy server, where the notification message includes that first user equipment and second user equipment separately access a same streaming media resource; switching a transmission manner of the streaming media resource from a unicast manner to a multicast manner; sending combined group information to a broadcast multicast service center BM-SC, where the combined group information includes an Internet Protocol IP address of the first user equipment, an IP address of the second user equipment, and a download address of the streaming media resource; and sending a notification response message to the proxy server, so that the proxy server learns that the BM-SC enables a multimedia broadcast multicast service MBMS service.

In some embodiments of the present invention, the processor 1503 is further configured to perform the following steps: receiving, by using the input apparatus, file delivery table FDT instance information and user service description USD information that are sent by the BM-SC, where the file delivery table instance information is a result of encoding performed on the streaming media resource after the BM-SC acquires the streaming media resource according to the combined group information; and sending, by using the output apparatus, the FDT instance information and the USD information to the proxy server.

In some embodiments of the present invention, the processor 1503 is further configured to perform the following steps: acquiring an IP address of the first user equipment and an IP address of the second user equipment from the notification message; acquiring an identity ID of the first user equipment and an ID of the second user equipment respectively according to the IP address of the first user equipment and the IP address of the second user equipment; determining, according to the ID of the first user equipment and the ID of the second user equipment, whether the first user equipment and the second user equipment support a multimedia broadcast multicast service MBMS service; and if the first user equipment and the second user equipment both support the MBMS service, triggering execution of the switching a transmission manner of the streaming media resource from a unicast manner to a multicast manner.

In some other embodiments of the present invention, the processor 1503 is further configured to perform the following steps: acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
determining, based on the acquired congestion information of the cell in which the first user equipment is located, congestion information of the cell in which the second user equipment is located, quality of service QoS information of the first user equipment, and QoS information of the second user equipment, to trigger execution of the switching a transmission manner of the streaming media resource from a unicast manner to a multicast manner.

In some other embodiments of the present invention, the processor 1503 is further configured to perform the following steps: acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment, a cell identity Cell ID of the cell in which the first user equipment is located, and acquiring, according to the ID of the second user equipment, a cell identity Cell ID of the cell in which the second user equipment is located;
querying whether the Cell ID of the cell in which the first user equipment is located and the Cell ID of the cell in which the second user equipment is located are in a same single frequency network area SFN area and a same multimedia broadcast multicast service area MBMS service area;
if the cell in which the first user equipment is located and the cell in which the second user equipment is located are in the same SFN area and the same MBMS Service area, triggering execution of the switching a transmission manner of the streaming media resource from a unicast manner to a multicast manner; and
if the cell in which the first user equipment is located and the cell in which the second user equipment is located are in the same SFN area but are not in the same MBMS Service area, instructing the BM-SC to create an MBMS Service area, and then triggering execution of the switching a transmission manner of the streaming media resource from a unicast manner to a multicast manner.

The following introduces another proxy server provided by an embodiment of the present invention. Referring to FIG. 16, the proxy server 1600 includes:
an input apparatus 1601, an output apparatus 1602, a processor 1603, and a memory 1604 (where there may be one or more processors 1603 in the proxy server 1600, and one processor is used as an example in FIG. 16). In some embodiments of the present invention, the input apparatus 1601, the output apparatus 1602, the processor 1603, and the memory 1604 may be connected by using a bus or in another manner, and FIG. 16 uses an example in which they are connected by using a bus.

The processor 1603 is configured to perform the following steps: detecting download addresses of streaming media resources that are requested separately by first user equipment and second user equipment, and acquiring that the first user equipment and the second user equipment separately access a same streaming media resource; reporting, by using the output apparatus, a notification message to a policy and charging rules function PCRF or a broadcast multicast service center BM-SC, where the notification message includes that the first user equipment and the second user equipment separately access the same streaming media resource; acquiring file delivery table FDT instance information and user service description USD information; and separately sending, by using the output apparatus, multimedia broadcast multicast service MBMS service indication information to the first user equipment and the second user equipment, where the MBMS service indication information includes the FDT instance information and the USD information.

In some embodiments of the present invention, the processor 1603 is further configured to perform the following steps: receiving, by using the input apparatus, the FDT instance information and the USD information that are sent by the PCRF.

In some embodiments of the present invention, the processor 1603 is further configured to perform the following steps: sending, by using the output apparatus, a download address corresponding to the streaming media resource to the broadcast multicast service center BM-SC; downloading the streaming media resource corresponding to the download address from a content server, or extracting the streaming media resource corresponding to the download address from a local storage; sending, by using the output apparatus, the streaming media resource to the BM-SC, so that the BM-SC encodes the streaming media resource to generate the FDT instance information; and receiving, by using the input apparatus, the FDT instance information and the USD information that are sent by the BM-SC.

In some embodiments of the present invention, the processor 1603 is further configured to perform the following steps: querying, by using user agency profile UAProf information, whether the first user equipment and the second user equipment support a multimedia broadcast multicast service MBMS service; and if the first user equipment and the second user equipment both support the MBMS service, triggering execution of the reporting a notification message to a policy and charging rules function PCRF.

In some other embodiments of the present invention, the processor 1603 is further configured to perform the following step: acquiring a media presentation description file MPD from a content server, where the notification message further includes the MPD.

The following introduces another BM-SC provided by an embodiment of the present invention, and referring to FIG. 17, the BM-SC 1700 includes:
an input apparatus 1701, an output apparatus 1702, a processor 1703, and a memory 1704 (where there may be one or more processors 1703 in the BM-SC 1700, and one processor is used as an example in FIG. 17). In some embodiments of the present invention, the input apparatus 1701, the output apparatus 1702, the processor 1703, and the memory 1704 may be connected by using a bus or in another manner, and FIG. 17 uses an example in which they are connected by using a bus.

The processor 1703 is configured to perform the following steps: receiving, by using the input apparatus, combined group information reported by a policy and charging rules function PCRF, where the combined group information includes an Internet protocol IP address of first user equipment, an IP address of second user equipment, and a download address of a streaming media resource, where the first user equipment and the second user equipment separately access a same streaming media resource; acquiring the streaming media resource according to the download address of the streaming media resource; encoding the streaming media resource, to obtain file delivery table FDT instance information; generating user service description USD information; and sending, by using the output apparatus, the FDT instance information and the USD information to the PCRF or a proxy server.

In some embodiments of the present invention, the processor 1703 is further configured to perform the following steps: receiving, by using the input apparatus, the streaming media resource corresponding to the download address and sent by the proxy server; or requesting, by using the output apparatus according to the download address, the streaming media resource corresponding to the download address from a content server, and receiving, by using the input apparatus, the streaming media resource corresponding to the download address and returned by the content server.

In some embodiments of the present invention, the combined group information further includes: a media presentation description file MPD; and the processor 1703 is further configured to perform the following step: acquiring, by using the input apparatus according to the MPD, the streaming media resource corresponding to another download address than the foregoing download address in the MPD.

In some embodiments of the present invention, the processor 1703 is further configured to perform the following step: simultaneously sending, by using the output apparatus, the streaming media resource to the first user equipment and the second user equipment according to a multimedia broadcast multicast service MBMS service.

In some embodiments of the present invention, the processor 1703 is further configured to perform the following step: sending, by using the output apparatus, MBMS session information to a base station of a cell to which the first user equipment belongs and a base station of a cell to which the second user equipment belongs; and sending, by using the output apparatus, the streaming media resource to the base station of the cell to which the first user equipment belongs and the base station of the cell to which the second user equipment belongs, so that the base station of the cell to which the first user equipment belongs sends the streaming media resource to the first user equipment and the base station of the cell to which the second user equipment belongs sends the streaming media resource to the second user equipment.

The following introduces another BM-SC provided by an embodiment of the present invention, which includes:
an input apparatus, an output apparatus, a processor, and a memory (where there may be one or more processors in the BM-SC, and one processor is used as an example). In some embodiments of the present invention, the input apparatus, the output apparatus, the processor, and the memory may be connected by using a bus or in another manner, and an example in which they are connected by using a bus is used.

The processor is configured to perform the following steps:
receiving, by using the input apparatus, a notification message reported by a proxy server, where the notification message includes that first user equipment and second user equipment separately access a same streaming media resource;
switching a transmission manner of the streaming media resource from a unicast manner to a multicast manner; and
sending, by using the output apparatus, a notification response message to the proxy server, so that the proxy server learns that the BM-SC enables a multimedia broadcast multicast service MBMS service.

In some embodiments of the present invention, the processor is further configured to perform the following steps:
acquiring an IP address of the first user equipment and an IP address of the second user equipment from the notification message;
acquiring an identity ID of the first user equipment and an ID of the second user equipment respectively according to the IP address of the first user equipment and the IP address of the second user equipment;
determining, according to the ID of the first user equipment and the ID of the second user equipment, whether the first user equipment and the second user equipment support the multimedia broadcast multicast service MBMS service; and
if the first user equipment and the second user equipment both support the MBMS service, triggering execution of the switching a transmission manner of the streaming media resource from a unicast manner to a multicast manner.

In some embodiments of the present invention, the processor is further configured to perform the following steps:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
determining, based on the acquired congestion information of the cell in which the first user equipment is located, congestion information of the cell in which the second user equipment is located, QoS information of the first user equipment, and QoS information of the second user equipment, to trigger execution of the switching a transmission manner of the streaming media resource from a unicast manner to a multicast manner.

In some embodiments of the present invention, the processor is further configured to perform the following steps:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment, a cell identity Cell ID of the cell in which the first user equipment is located, and acquiring, according to the ID of the second user equipment, a cell identity Cell ID of the cell in which the second user equipment is located;
querying whether the Cell ID of the cell in which the first user equipment is located and the Cell ID of the cell in which the second user equipment is located are in a same single frequency network area SFN area and a same multimedia broadcast multicast service area MBMS service area;
if the cell in which the first user equipment is located and the cell in which the second user equipment is located are in the same SFN area and the same MBMS Service area, triggering execution of the switching a transmission manner of the streaming media resource from a unicast manner to a multicast manner; and
if the cell in which the first user equipment is located and the cell in which the second user equipment is located are in the same SFN area but are not in the same MBMS Service area, creating an MBMS Service area, incorporating the Cell ID of the cell in which the first user equipment is located and the Cell ID of the cell in which the second user equipment is located into the created MBMS Service area, and then triggering execution of the switching a transmission manner of the streaming media resource from a unicast manner to a multicast manner.

In some embodiments of the present invention, the processor is specifically configured to perform the following steps:
sending a Cell ID query message to a packet data network gateway P-GW or a policy and charging rules function PCRF according to the ID of the first user equipment, where the Cell ID query message includes the ID of the first user equipment;
receiving Cell ID feedback information returned by the P-GW or the PCRF, where the Cell ID feedback information includes the Cell ID of the cell in which the first user equipment is located;
sending a Cell ID query message to the packet data network gateway P-GW or the policy and charging rules function PCRF according to the ID of the second user equipment, where the Cell ID query message includes the ID of the second user equipment; and
receiving Cell ID feedback information returned by the P-GW or the PCRF, where the Cell ID feedback information includes the Cell ID of the cell in which the second user equipment is located.

To sum up, it can be known from FIG. 15 to FIG. 17 that, after receiving a notification message reported by a proxy server, a PCRF switches a transmission manner of a streaming media resource from a unicast manner to a multicast manner, and then sends combined group information to a BM-SC; the BM-SC enables an MBMS service after receiving the combined group information; the PCRF notifies the proxy server by using a notification response message; the proxy server acquires FDT instance information and USD information, and then sends the FDT instance information and the USD information separately to multiple user equipments that access a same streaming media resource; after receiving the FDT instance information and the USD information, the user equipments can enable the MBMS service and receive the streaming media resource, thereby implementing switching of streaming media resource transmission from unicast to multicast, and reducing backhaul link resources of a core network and air interface resources of a base station.

A person of ordinary skill in the art should understand that, all of or a part of the steps in the method according to the embodiments may be implemented by a program instructing relevant hardware. The corresponding program may be stored in a computer readable storage medium. The storage medium may be a read-only memory, a magnetic disk, or an optical disc.

A method for supporting multicast of streaming media, and a related apparatus and system according to the present invention are described in detail above. A person of ordinary skill in the art can make variations and modifications to the present invention in terms of the specific implementations and application scopes according to the ideas of the present invention. Therefore, the specification shall not be construed as a limit to the present invention.

## Claims

1. A method for supporting multicast of streaming media, comprising:
receiving a notification message reported by a proxy server, wherein the notification message comprises that first user equipment and second user equipment separately access a same streaming media resource;
switching a transmission manner of the streaming media resource from a unicast manner to a multicast manner;
sending combined group information to a broadcast multicast service center BM-SC, wherein the combined group information comprises an Internet Protocol IP address of the first user equipment, an IP address of the second user equipment, and a download address of the streaming media resource; and
sending a notification response message to the proxy server, so that the proxy server learns that the BM-SC enables a multimedia broadcast multicast service MBMS service.

2. The method according to claim 1, after the sending combined group information to a broadcast multicast service center BM-SC, further comprising:
receiving file delivery table FDT instance information and user service description USD information that are sent by the BM-SC, wherein the FDT instance information is a result of encoding performed on the streaming media resource after the BM-SC acquires the streaming media resource according to the combined group information; and
sending the FDT instance information and the USD information to the proxy server.

3. The method according to claim 1 or 2, after the receiving a notification message reported by a proxy server, further comprising:
acquiring the IP address of the first user equipment and the IP address of the second user equipment from the notification message;
acquiring an identity ID of the first user equipment and an ID of the second user equipment respectively according to the IP address of the first user equipment and the IP address of the second user equipment;
determining, according to the ID of the first user equipment and the ID of the second user equipment, whether the first user equipment and the second user equipment support the multimedia broadcast multicast service MBMS service; and
if the first user equipment and the second user equipment both support the MBMS service, triggering execution of the switching a transmission manner of the streaming media resource from a unicast manner to a multicast manner.

4. The method according to any one of claims 1 to 3, after the receiving a notification message reported by a proxy server, further comprising:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
determining, based on the acquired congestion information of the cell in which the first user equipment is located, congestion information of the cell in which the second user equipment is located, QoS information of the first user equipment, and QoS information of the second user equipment, to trigger execution of the switching a transmission manner of the streaming media resource from a unicast manner to a multicast manner.

5. The method according to any one of claims 1 to 4, after the receiving a notification message reported by a proxy server, further comprising:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment, a cell identity Cell ID of the cell in which the first user equipment is located, and acquiring, according to the ID of the second user equipment, a cell identity Cell ID of the cell in which the second user equipment is located;
querying whether the Cell ID of the cell in which the first user equipment is located and the Cell ID of the cell in which the second user equipment is located are in a same single frequency network area SFN area and a same multimedia broadcast multicast service area MBMS service area;
if the cell in which the first user equipment is located and the cell in which the second user equipment is located are in the same SFN area and the same MBMS Service area, triggering execution of the switching a transmission manner of the streaming media resource from a unicast manner to a multicast manner; and
if the cell in which the first user equipment is located and the cell in which the second user equipment is located are in the same SFN area but are not in the same MBMS Service area, instructing the BM-SC to create an MBMS Service area, and then triggering execution of the switching a transmission manner of the streaming media resource from a unicast manner to a multicast manner.

6. A method for supporting multicast of streaming media, comprising:
detecting download addresses of streaming media resources that are requested separately by first user equipment and second user equipment, and acquiring that the first user equipment and the second user equipment separately access a same streaming media resource;
reporting a notification message to a policy and charging rules function PCRF or a broadcast multicast service center BM-SC, wherein the notification message comprises that the first user equipment and the second user equipment separately access the same streaming media resource;
acquiring file delivery table FDT instance information and user service description USD information; and
separately sending multimedia broadcast multicast service MBMS service indication information to the first user equipment and the second user equipment, wherein the MBMS service indication information comprises the FDT instance information and the USD information.

7. The method according to claim 6, wherein the acquiring file delivery table FDT instance information and user service description USD information comprises:
receiving the FDT instance information and the USD information that are sent by the PCRF.

8. The method according to claim 6, wherein the acquiring file delivery table FDT instance information and user service description USD information comprises:
sending a download address corresponding to the streaming media resource to the broadcast multicast service center BM-SC;
downloading the streaming media resource corresponding to the download address from a content server, or extracting the streaming media resource corresponding to the download address from a local storage;
sending the streaming media resource to the BM-SC, so that the BM-SC encodes the streaming media resource to generate the FDT instance information; and
receiving the FDT instance information and the USD information that are sent by the BM-SC.

9. The method according to any one of claims 6 to 8, after the detecting download addresses of streaming media resources that are requested separately by first user equipment and second user equipment, further comprising:
querying, by using user agency profile UAProf information, whether the first user equipment and the second user equipment support a multimedia broadcast multicast service MBMS service; and
if the first user equipment and the second user equipment both support the MBMS service, triggering execution of the reporting a notification message to a policy and charging rules function PCRF.

10. The method according to any one of claims 5 to 9, before the reporting a notification message to a policy and charging rules function PCRF, further comprising:
acquiring a media presentation description file MPD from the content server, wherein the notification message further comprises the MPD.

11. A method for supporting multicast of streaming media, comprising:
receiving combined group information reported by a policy and charging rules function PCRF, wherein the combined group information comprises an Internet Protocol IP address of first user equipment, an IP address of second user equipment, and a download address of a streaming media resource, wherein the first user equipment and the second user equipment separately access a same streaming media resource;
acquiring the streaming media resource according to the download address of the streaming media resource;
encoding the streaming media resource, to obtain file delivery table FDT instance information;
generating user service description USD information; and
sending the FDT instance information and the USD information to the PCRF or a proxy server.

12. The method according to claim 11, wherein the acquiring the streaming media resource according to the download address of the streaming media resource comprises:
receiving the streaming media resource corresponding to the download address and sent by the proxy server; or
requesting, according to the download address, the streaming media resource corresponding to the download address from a content server, and receiving the streaming media resource corresponding to the download address and returned by the content server.

13. The method according to claim 11 or 12, wherein the combined group information further comprises: a media presentation description file MPD; and
after the acquiring the streaming media resource according to the download address of the streaming media resource, the method further comprises:
acquiring, according to the MPD, the streaming media resource corresponding to another download address than the foregoing download address in the MPD.

14. The method according to any one of claims 11 to 13, after the sending the FDT instance information and the USD information to the PCRF or a proxy server, further comprising:
simultaneously sending the streaming media resource to the first user equipment and the second user equipment according to a multimedia broadcast multicast service MBMS service.

15. The method according to claim 14, wherein the simultaneously sending the streaming media resource to the first user equipment and the second user equipment according to a multimedia broadcast multicast service MBMS service comprises:
sending MBMS session information to a base station of a cell to which the first user equipment belongs and a base station of a cell to which the second user equipment belongs; and
sending the streaming media resource to the base station of the cell to which the first user equipment belongs and the base station of the cell to which the second user equipment belongs, so that the base station of the cell to which the first user equipment belongs sends the streaming media resource to the first user equipment and the base station of the cell to which the second user equipment belongs sends the streaming media resource to the second user equipment.

16. A method for supporting multicast of streaming media, comprising:
receiving a notification message reported by a proxy server, wherein the notification message comprises that first user equipment and second user equipment separately access a same streaming media resource;
switching a transmission manner of the streaming media resource from a unicast manner to a multicast manner;
sending a notification response message to the proxy server, so that the proxy server learns that the BM-SC enables a multimedia broadcast multicast service MBMS service.

17. The method according to claim 16, after the sending a notification response message to the proxy server, further comprising:
acquiring the streaming media resource according to a download address of the streaming media resource;
encoding the streaming media resource, to obtain file delivery table FDT instance information;
generating user service description USD information; and
sending the FDT instance information and the USD information to the proxy server.

18. The method according to claim 16 or 17, after the receiving a notification message reported by a proxy server, further comprising:
acquiring an IP address of the first user equipment and an IP address of the second user equipment from the notification message;
acquiring an identity ID of the first user equipment and an ID of the second user equipment respectively according to the IP address of the first user equipment and the IP address of the second user equipment;
determining, according to the ID of the first user equipment and the ID of the second user equipment, whether the first user equipment and the second user equipment support the multimedia broadcast multicast service MBMS service; and
if the first user equipment and the second user equipment both support the MBMS service, triggering execution of the switching a transmission manner of the streaming media resource from a unicast manner to a multicast manner.

19. The method according to any one of claims 16 to 18, after the receiving a notification message reported by a proxy server, further comprising:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
determining, based on the acquired congestion information of the cell in which the first user equipment is located, congestion information of the cell in which the second user equipment is located, QoS information of the first user equipment, and QoS information of the second user equipment, to trigger execution of the switching a transmission manner of the streaming media resource from a unicast manner to a multicast manner.

20. The method according to any one of claims 16 to 19, after the receiving a notification message reported by a proxy server, further comprising:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment, a cell identity Cell ID of the cell in which the first user equipment is located, and acquiring, according to the ID of the second user equipment, a cell identity Cell ID of the cell in which the second user equipment is located;
querying whether the Cell ID of the cell in which the first user equipment is located and the Cell ID of the cell in which the second user equipment is located are in a same single frequency network area SFN area and a same multimedia broadcast multicast service area MBMS service area;
if the cell in which the first user equipment is located and the cell in which the second user equipment is located are in the same SFN area and the same MBMS Service area, triggering execution of the switching a transmission manner of the streaming media resource from a unicast manner to a multicast manner; and
if the cell in which the first user equipment is located and the cell in which the second user equipment is located are in the same SFN area but are not in the same MBMS Service area, creating an MBMS Service area, incorporating the Cell ID of the cell in which the first user equipment is located and the Cell ID of the cell in which the second user equipment is located into the created MBMS Service area, and then triggering execution of the switching a transmission manner of the streaming media resource from a unicast manner to a multicast manner.

21. The method according to claim 20, wherein the acquiring, according to the ID of the first user equipment, a cell identity Cell ID of the cell in which the first user equipment is located comprises:
sending a Cell ID query message to a packet data network gateway P-GW or a policy and charging rules function PCRF according to the ID of the first user equipment, wherein the Cell ID query message comprises the ID of the first user equipment; and
receiving Cell ID feedback information returned by the P-GW or the PCRF, wherein the Cell ID feedback information comprises the Cell ID of the cell in which the first user equipment is located; and
the acquiring, according to the ID of the second user equipment, a cell identity Cell ID of the cell in which the second user equipment is located comprises:
sending a Cell ID query message to the packet data network gateway P-GW or the policy and charging rules function PCRF according to the ID of the second user equipment, wherein the Cell ID query message comprises the ID of the second user equipment; and
receiving Cell ID feedback information returned by the P-GW or the PCRF, wherein the Cell ID feedback information comprises the Cell ID of the cell in which the second user equipment is located.

22. A policy and charging rules function PCRF, comprising:
a receiving module, configured to receive a notification message reported by a proxy server, wherein the notification message comprises that first user equipment and second user equipment separately access a same streaming media resource;
a multicast switch module, configured to switch a transmission manner of the streaming media resource from a unicast manner to a multicast manner; and
a sending module, configured to send combined group information to a broadcast multicast service center BM-SC, wherein the combined group information comprises an Internet Protocol IP address of the first user equipment, an IP address of the second user equipment, and a download address of the streaming media resource; wherein
the sending module is further configured to send a notification response message to the proxy server, so that the proxy server learns that the BM-SC enables a multimedia broadcast multicast service MBMS service.

23. The PCRF according to claim 22, wherein
the receiving module is further configured to receive file delivery table FDT instance information and user service description USD information that are sent by the BM-SC, wherein the FDT instance information is a result of encoding performed on the streaming media resource after the BM-SC acquires the streaming media resource according to the combined group information; and
the sending module is further configured to send the FDT instance information and the USD information to the proxy server.

24. The PCRF according to claim 22 or 23, wherein the PCRF further comprises: an acquiring module and a determining module, wherein
the acquiring module is configured to acquire the IP address of the first user equipment and the IP address of the second user equipment from the notification message;
the acquiring module is further configured to acquire an identity ID of the first user equipment and an ID of the second user equipment respectively according to the IP address of the first user equipment and the IP address of the second user equipment;
the determining module is configured to determine, according to the ID of the first user equipment and the ID of the second user equipment, whether the first user equipment and the second user equipment support the multimedia broadcast multicast service MBMS service; and
the determining module is further configured to trigger execution of the multicast switch module if the first user equipment and the second user equipment both support the MBMS service.

25. The PCRF according to any one of claims 22 to 24, wherein
the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
the acquiring module is further configured to determine, based on the acquired congestion information of the cell in which the first user equipment is located, congestion information of the cell in which the second user equipment is located, quality of service QoS information of the first user equipment, and QoS information of the second user equipment, to trigger execution of the multicast switch module.

26. The PCRF according to any one of claims 22 to 25, wherein the PCRF further comprises: a notification module, wherein
the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment, a cell identity Cell ID of the cell in which the first user equipment is located, and acquire, according to the ID of the second user equipment, a cell identity Cell ID of the cell in which the second user equipment is located;
the determining module is configured to query whether the Cell ID of the cell in which the first user equipment is located and the Cell ID of the cell in which the second user equipment is located are in a same single frequency network area SFN area and a same multimedia broadcast multicast service area MBMS service area;
the determining module is further configured to trigger execution of the multicast switch module if the cell in which the first user equipment is located and the cell in which the second user equipment is located are in the same SFN area and the same MBMS Service area;
the notification module is configured to instruct the BM-SC to create an MBMS Service area if the cell in which the first user equipment is located and the cell in which the second user equipment is located are in the same SFN area but are not in the same MBMS Service area; and
the notification module is further configured to trigger execution of the multicast switch module after instructing the BM-SC to create the MBMS Service area.

27. A proxy server, comprising:
a detection module, configured to detect download addresses of streaming media resources that are requested separately by first user equipment and second user equipment, and acquire that the first user equipment and the second user equipment separately access a same streaming media resource;
a sending module, configured to report a notification message to a policy and charging rules function PCRF or a broadcast multicast service center BM-SC, wherein the notification message comprises that the first user equipment and the second user equipment separately access the same streaming media resource; and
an acquiring module, configured to acquire file delivery table FDT instance information and user service description USD information; wherein
the sending module is further configured to separately send multimedia broadcast multicast service MBMS service indication information to the first user equipment and the second user equipment, wherein the MBMS service indication information comprises the FDT instance information and the USD information.

28. The proxy server according to claim 27, wherein the acquiring module is specifically configured to receive the FDT instance information and the USD information that are sent by the PCRF.

29. The proxy server according to claim 27, wherein the acquiring module comprises:
an address sending submodule, configured to send a download address corresponding to the streaming media resource to the broadcast multicast service center BM-SC;
a resource acquiring submodule, configured to download the streaming media resource corresponding to the download address from a content server; or extract the streaming media resource corresponding to the download address from a local storage;
a resource sending submodule, configured to send the streaming media resource to the BM-SC, so that the BM-SC encodes the streaming media resource to generate the FDT instance information; and
a receiving submodule, configured to receive the FDT instance information and the USD information that are sent by the BM-SC.

30. The proxy server according to any one of claims 27 to 29, wherein the proxy server further comprises: a query module, wherein
the query module is configured to query, by using user agency profile UAProf information, whether the first user equipment and the second user equipment support a multimedia broadcast multicast service MBMS service; and
the query module is further configured to trigger execution of the sending module if the first user equipment and the second user equipment both support the MBMS service.

31. The proxy server according to any one of claims 27 to 30, wherein the acquiring module is further configured to acquire a media presentation description file MPD from the content server, wherein the notification message further comprises the MPD.

32. A broadcast multicast service center BM-SC, comprising:
a receiving module, configured to receive combined group information reported by a policy and charging rules function PCRF, wherein the combined group information comprises an Internet Protocol IP address of first user equipment, an IP address of second user equipment, and a download address of a streaming media resource, wherein the first user equipment and the second user equipment separately access a same streaming media resource;
an acquiring module, configured to acquire the streaming media resource according to the download address of the streaming media resource;
an encoding module, configured to encode the streaming media resource, to obtain file delivery table FDT instance information;
a generating module, configured to generate user service description USD information; and
a sending module, configured to send the FDT instance information and the USD information to the PCRF or a proxy server.

33. The BM-SC according to claim 32, wherein the acquiring module is specifically configured to receive the streaming media resource corresponding to the download address and sent by the proxy server; or
the acquiring module is specifically configured to request, according to the download address, the streaming media resource corresponding to the download address from a content server, and receive the streaming media resource corresponding to the download address and returned by the content server.

34. The BM-SC according to claim 32 or 33, wherein the combined group information further comprises: a media presentation description file MPD; and
the acquiring module is further configured to acquire, according to the MPD, the streaming media resource corresponding to another download address than the foregoing download address in the MPD.

35. The BM-SC according to any one of claims 32 to 34, wherein the sending module is further configured to simultaneously send the streaming media resource to the first user equipment and the second user equipment according to a multimedia broadcast multicast service MBMS service.

36. The BM-SC according to claim 35, wherein the sending module is specifically configured to send MBMS session information to a base station of a cell to which the first user equipment belongs and a base station of a cell to which the second user equipment belongs; and send the streaming media resource to the base station of the cell to which the first user equipment belongs and the base station of the cell to which the second user equipment belongs, so that the base station of the cell to which the first user equipment belongs sends the streaming media resource to the first user equipment and the base station of the cell to which the second user equipment belongs sends the streaming media resource to the second user equipment.

37. A broadcast multicast service center BM-SC, comprising:
a receiving module, configured to receive a notification message reported by a proxy server, wherein the notification message comprises that first user equipment and second user equipment separately access a same streaming media resource;
a multicast switch module, configured to switch a transmission manner of the streaming media resource from a unicast manner to a multicast manner; and
a sending module, configured to send a notification response message to the proxy server, so that the proxy server learns that the BM-SC enables a multimedia broadcast multicast service MBMS service.

38. The BM-SC according to claim 37, wherein the BM-SC further comprises:
an acquiring module, configured to acquire the streaming media resource according to a download address of the streaming media resource;
an encoding module, configured to encode the streaming media resource, to obtain file delivery table FDT instance information; and
a generating module, configured to generate user service description USD information; wherein
the sending module is further configured to send the FDT instance information and the USD information to the proxy server.

39. The BM-SC according to claim 37 or 38, wherein the BM-SC further comprises: an acquiring module and a determining module, wherein
the acquiring module is configured to acquire an IP address of the first user equipment and an IP address of the second user equipment from the notification message;
the acquiring module is further configured to acquire an identity ID of the first user equipment and an ID of the second user equipment respectively according to the IP address of the first user equipment and the IP address of the second user equipment;
the determining module is configured to determine, according to the ID of the first user equipment and the ID of the second user equipment, whether the first user equipment and the second user equipment support the multimedia broadcast multicast service MBMS service; and
the determining module is further configured to trigger execution of the multicast switch module if the first user equipment and the second user equipment both support the MBMS service.

40. The BM-SC according to any one of claims 37 to 39, wherein
the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
the acquiring module is further configured to determine, based on the acquired congestion information of the cell in which the first user equipment is located, congestion information of the cell in which the second user equipment is located, quality of service QoS information of the first user equipment, and QoS information of the second user equipment, to trigger execution of the multicast switch module.

41. The BM-SC according to any one of claims 37 to 40, wherein the BM-SC further comprises: a query module and a creating module, wherein
the acquiring module is configured to acquire the IP address of the first user equipment and the IP address of the second user equipment from the notification message;
the acquiring module is further configured to acquire the identity ID of the first user equipment and the ID of the second user equipment respectively according to the IP address of the first user equipment and the IP address of the second user equipment;
the acquiring module is further configured to acquire, according to the ID of the first user equipment, a cell identity Cell ID of the cell in which the first user equipment is located, and acquire, according to the ID of the second user equipment, a cell identity Cell ID of the cell in which the second user equipment is located;
the query module is configured to query whether the Cell ID of the cell in which the first user equipment is located and the Cell ID of the cell in which the second user equipment is located are in a same single frequency network area SFN area and a same multimedia broadcast multicast service area MBMS service area;
the query module is further configured to trigger execution of the multicast switch module if the cell in which the first user equipment is located and the cell in which the second user equipment is located are in the same SFN area and the same MBMS Service area; and
the creating module is configured to: if the cell in which the first user equipment is located and the cell in which the second user equipment is located are in the same SFN area but are not in the same MBMS Service area, create an MBMS Service area, incorporate the Cell ID of the cell in which the first user equipment is located and the Cell ID of the cell in which the second user equipment is located into the created MBMS Service area, and then trigger execution of the multicast switch module.

42. The BM-SC according to claim 41, wherein the acquiring module is specifically configured to send a Cell ID query message to a packet data network gateway P-GW or a policy and charging rules function PCRF according to the ID of the first user equipment, wherein the Cell ID query message comprises the ID of the first user equipment; receive Cell ID feedback information returned by the P-GW or the PCRF, wherein the Cell ID feedback information comprises the Cell ID of the cell in which the first user equipment is located; send a Cell ID query message to the packet data network gateway P-GW or the policy and charging rules function PCRF according to the ID of the second user equipment, wherein the Cell ID query message comprises the ID of the second user equipment; and receive Cell ID feedback information returned by the P-GW or the PCRF, wherein the Cell ID feedback information comprises the Cell ID of the cell in which the second user equipment is located.

43. A multimedia broadcast multicast service MBMS system, comprising: the policy and charging rules function PCRF according to any one of claims 22 to 26, the proxy server according to any one of claims 27 to 31, the broadcast multicast service center BM-SC according to any one of claims 32 to 36, first user equipment, and second user equipment, wherein
the PCRF is separately connected to the BM-SC and the proxy server in a communicable manner.

44. The system according to claim 43, wherein the PCRF is connected to the proxy server by using an Rx interface, and the PCRF is connected to the BM-SC by using a V3 interface.

45. The system according to claim 43 or 44, wherein the proxy server is connected to the BM-SC by using a V 1 interface and a V2 interface.

46. A multimedia broadcast multicast service MBMS system, comprising: the proxy server according to any one of claims 27 to 31, the broadcast multicast service center BM-SC according to any one of claims 37 to 42, first user equipment, and second user equipment, wherein
the BM-SC is connected to the proxy server in a communicable manner.

47. A policy and charging rules function PCRF, comprising an input apparatus, an output apparatus, a memory, and a processor, wherein
the processor performs the following steps:
receiving, by using the input apparatus, a notification message reported by a proxy server, wherein the notification message comprises that first user equipment and second user equipment separately access a same streaming media resource;
switching a transmission manner of the streaming media resource from a unicast manner to a multicast manner;
sending, by using the output apparatus, combined group information to a broadcast multicast service center BM-SC, wherein the combined group information comprises an Internet Protocol IP address of the first user equipment, an IP address of the second user equipment, and a download address of the streaming media resource; and
sending, by using the output apparatus, a notification response message to the proxy server, so that the proxy server learns that the BM-SC enables a multimedia broadcast multicast service MBMS service.

48. The PCRF according to claim 47, wherein the processor is further configured to perform the following steps:
receiving, by using the input apparatus, file delivery table FDT instance information and user service description USD information that are sent by the BM-SC, wherein the file delivery table instance information is a result of encoding performed on the streaming media resource after the BM-SC acquires the streaming media resource according to the combined group information; and
sending, by using the output apparatus, the FDT instance information and the USD information to the proxy server.

49. The PCRF according to claim 47 or 48, wherein the processor is further configured to perform the following steps:
acquiring the IP address of the first user equipment and the IP address of the second user equipment from the notification message;
acquiring an identity ID of the first user equipment and an ID of the second user equipment respectively according to the IP address of the first user equipment and the IP address of the second user equipment;
determining, according to the ID of the first user equipment and the ID of the second user equipment, whether the first user equipment and the second user equipment support the multimedia broadcast multicast service MBMS service; and
if the first user equipment and the second user equipment both support the MBMS service, triggering execution of the switching a transmission manner of the streaming media resource from a unicast manner to a multicast manner.

50. The PCRF according to any one of claims 47 to 49, wherein the processor is further configured to perform the following steps:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
determining, based on the acquired congestion information of the cell in which the first user equipment is located, congestion information of the cell in which the second user equipment is located, quality of service QoS information of the first user equipment, and QoS information of the second user equipment, to trigger execution of the switching a transmission manner of the streaming media resource from a unicast manner to a multicast manner.

51. The PCRF according to any one of claims 47 to 50, wherein the processor is further configured to perform the following steps:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment, a cell identity Cell ID of the cell in which the first user equipment is located, and acquiring, according to the ID of the second user equipment, a cell identity Cell ID of the cell in which the second user equipment is located;
querying whether the Cell ID of the cell in which the first user equipment is located and the Cell ID of the cell in which the second user equipment is located are in a same single frequency network area SFN area and a same multimedia broadcast multicast service area MBMS service area;
if the cell in which the first user equipment is located and the cell in which the second user equipment is located are in the same SFN area and the same MBMS Service area, triggering execution of the switching a transmission manner of the streaming media resource from a unicast manner to a multicast manner; and
if the cell in which the first user equipment is located and the cell in which the second user equipment is located are in the same SFN area but are not in the same MBMS Service area, instructing the BM-SC to create an MBMS Service area, and then triggering execution of the switching a transmission manner of the streaming media resource from a unicast manner to a multicast manner.

52. A proxy server, comprising: an input apparatus, an output apparatus, a memory, and a processor, wherein
the processor performs the following steps:
detecting download addresses of streaming media resources that are requested separately by first user equipment and second user equipment, and acquiring that the first user equipment and the second user equipment separately access a same streaming media resource;
reporting, by using the output apparatus, a notification message to a policy and charging rules function PCRF or a broadcast multicast service center BM-SC, wherein the notification message comprises that the first user equipment and the second user equipment separately access the same streaming media resource;
acquiring file delivery table FDT instance information and user service description USD information; and
separately sending, by using the output apparatus, multimedia broadcast multicast service MBMS service indication information to the first user equipment and the second user equipment, wherein the MBMS service indication information comprises the FDT instance information and the USD information.

53. The proxy server according to claim 52, wherein the processor is specifically configured to perform the following step:
receiving, by using the input apparatus, the FDT instance information and the USD information that are sent by the PCRF.

54. The proxy server according to claim 50, wherein the processor is specifically configured to perform the following steps:
sending, by using the output apparatus, a download address corresponding to the streaming media resource to the broadcast multicast service center BM-SC;
downloading the streaming media resource corresponding to the download address from a content server, or extracting the streaming media resource corresponding to the download address from a local storage;
sending, by using the output apparatus, the streaming media resource to the BM-SC, so that the BM-SC encodes the streaming media resource to generate the FDT instance information; and
receiving, by using the input apparatus, the FDT instance information and the USD information that are sent by the BM-SC.

55. The proxy server according to any one of claims 51 to 54, wherein the processor is further configured to perform the following steps:
querying, by using user agency profile UAProf information, whether the first user equipment and the second user equipment support a multimedia broadcast multicast service MBMS service; and
if the first user equipment and the second user equipment both support the MBMS service, triggering execution of the reporting a notification message to a policy and charging rules function PCRF.

56. The proxy server according to any one of claims 51 to 55, wherein the processor is further configured to perform the following step:
acquiring a media presentation description file MPD from the content server, wherein the notification message further comprises the MPD.

57. A broadcast multicast service center BM-SC, comprising: an input apparatus, an output apparatus, a memory, and a processor, wherein
the processor performs the following steps:
receiving, by using the input apparatus, combined group information reported by a policy and charging rules function PCRF, wherein the combined group information comprises an Internet Protocol IP address of first user equipment, an IP address of second user equipment, and a download address of a streaming media resource, wherein the first user equipment and the second user equipment separately access a same streaming media resource;
acquiring the streaming media resource according to the download address of the streaming media resource;
encoding the streaming media resource, to obtain file delivery table FDT instance information;
generating user service description USD information; and
sending, by using the output apparatus, the FDT instance information and the USD information to the PCRF or a proxy server.

58. The BM-SC according to claim 57, wherein the processor is specifically configured to perform the following steps:
receiving, by using the input apparatus, the streaming media resource corresponding to the download address and sent by the proxy server; or
requesting, by using the output apparatus according to the download address, the streaming media resource corresponding to the download address from a content server, and receiving, by using the input apparatus, the streaming media resource corresponding to the download address and returned by the content server.

59. The BM-SC according to claim 57 or 58, wherein the combined group information further comprises: a media presentation description file MPD; and
the processor is further configured to perform the following step:
acquiring, by using the input apparatus according to the MPD, the streaming media resource corresponding to another download address than the foregoing download address in the MPD.

60. The BM-SC according to any one of claims 57 to 59, wherein the processor is further configured to perform the following step:
simultaneously sending, by using the output apparatus, the streaming media resource to the first user equipment and the second user equipment according to a multimedia broadcast multicast service MBMS service.

61. The BM-SC according to claim 60, wherein the processor is specifically configured to perform the following steps:
sending, by using the output apparatus, MBMS session information to a base station of a cell to which the first user equipment belongs and a base station of a cell to which the second user equipment belongs; and
sending, by using the output apparatus, the streaming media resource to the base station of the cell to which the first user equipment belongs and the base station of the cell to which the second user equipment belongs, so that the base station of the cell to which the first user equipment belongs sends the streaming media resource to the first user equipment and the base station of the cell to which the second user equipment belongs sends the streaming media resource to the second user equipment.

62. A broadcast multicast service center BM-SC, comprising: an input apparatus, an output apparatus, a memory, and a processor, wherein
the processor performs the following steps:
receiving, by using the input apparatus, a notification message reported by a proxy server, wherein the notification message comprises that first user equipment and second user equipment separately access a same streaming media resource;
switching a transmission manner of the streaming media resource from a unicast manner to a multicast manner; and
sending, by using the output apparatus, a notification response message to the proxy server, so that the proxy server learns that the BM-SC enables a multimedia broadcast multicast service MBMS service.

63. The BM-SC according to claim 62, wherein the processor is further configured to perform the following steps:
acquiring an IP address of the first user equipment and an IP address of the second user equipment from the notification message;
acquiring an identity ID of the first user equipment and an ID of the second user equipment respectively according to the IP address of the first user equipment and the IP address of the second user equipment;
determining, according to the ID of the first user equipment and the ID of the second user equipment, whether the first user equipment and the second user equipment support the multimedia broadcast multicast service MBMS service; and
if the first user equipment and the second user equipment both support the MBMS service, triggering execution of the switching a transmission manner of the streaming media resource from a unicast manner to a multicast manner.

64. The BM-SC according to claim 62 or 63, wherein the processor is further configured to perform the following steps:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment and the ID of the second user equipment, congestion information of a cell in which the first user equipment is located, congestion information of a cell in which the second user equipment is located, quality of service QoS information of the first user equipment, and QoS information of the second user equipment; and
determining, based on the acquired congestion information of the cell in which the first user equipment is located, congestion information of the cell in which the second user equipment is located, QoS information of the first user equipment, and QoS information of the second user equipment, to trigger execution of the switching a transmission manner of the streaming media resource from a unicast manner to a multicast manner.

65. The BM-SC according to any one of claims 62 to 64, wherein the processor is further configured to perform the following steps:
acquiring the IP address of the first user equipment and the IP address of the second user equipment from the notification message;
acquiring the identity ID of the first user equipment and the ID of the second user equipment respectively according to the IP address of the first user equipment and the IP address of the second user equipment;
acquiring, according to the ID of the first user equipment, a cell identity Cell ID of the cell in which the first user equipment is located, and acquiring, according to the ID of the second user equipment, a cell identity Cell ID of the cell in which the second user equipment is located;
querying whether the Cell ID of the cell in which the first user equipment is located and the Cell ID of the cell in which the second user equipment is located are in a same single frequency network area SFN area and a same multimedia broadcast multicast service area MBMS service area;
if the cell in which the first user equipment is located and the cell in which the second user equipment is located are in the same SFN area and the same MBMS Service area, triggering execution of the switching a transmission manner of the streaming media resource from a unicast manner to a multicast manner; and
if the cell in which the first user equipment is located and the cell in which the second user equipment is located are in the same SFN area but are not in the same MBMS Service area, creating an MBMS Service area, incorporating the Cell ID of the cell in which the first user equipment is located and the Cell ID of the cell in which the second user equipment is located into the created MBMS Service area, and then triggering execution of the switching a transmission manner of the streaming media resource from a unicast manner to a multicast manner.

66. The BM-SC according to claim 65, wherein the processor is specifically configured to perform the following steps:
sending a Cell ID query message to a packet data network gateway P-GW or a policy and charging rules function PCRF according to the ID of the first user equipment, wherein the Cell ID query message comprises the ID of the first user equipment;
receiving Cell ID feedback information returned by the P-GW or the PCRF, wherein the Cell ID feedback information comprises the Cell ID of the cell in which the first user equipment is located;
sending a Cell ID query message to the packet data network gateway P-GW or the policy and charging rules function PCRF according to the ID of the second user equipment, wherein the Cell ID query message comprises the ID of the second user equipment; and
receiving Cell ID feedback information returned by the P-GW or the PCRF, wherein the Cell ID feedback information comprises the Cell ID of the cell in which the second user equipment is located.
